# EUROPEAN PATENT APPLICATION

(11) **EP 4 207 908 A1**
(43) Date of publication of application: **05.07.2023**
(21) Application number: 21881957.1
(22) Date of filing: 18.10.2021
(51) Int. Cl.: H04W 72/04

(54) **ELECTRONIC DEVICE, COMMUNICATION METHOD AND STORAGE MEDIUM**

(30) Priority: 22.10.2020 CN 202011141631
(71) Applicant: Sony Group Corporation, Minato-Ku, Tokyo, 108-0075 (JP)
(72) Inventor: LIU, Min, Beijing 100028 (CN); CAO, Jianfei, Beijing 100028 (CN)
(74) Representative: D Young & Co LLP
(86) International application number: PCT/CN2021/124388
(87) International publication number: WO 2022/083541

(57) **Abstract**

The present disclosure relates to an electronic device, a communication method and a storage medium in a wireless communication system. There is provided an electronic device on side of a base station, comprising a processing circuitry configured to: determine a first beam for a first transport channel between the base station and an UE; send, to the UE, a dynamic signaling including beam indication information on the first beam, such that a beam for the first transport channel is updated to the first beam; and in a case where the updating of the beam for the first transport channel is successful, update a beam for a second transport channel and/or a reference signal between the base station and the UE to the first beam.

## Description

### FIELD OF THE INVENTION

The present disclosure relates to an electronic device, a communication method, and a storage medium, and more particularly, to an electronic device, a communication method, and a storage medium for common beam operation between different physical channels in a wireless communication system.

### BACKGROUND

Large-scale antenna technology is widely used in current wireless communication systems, in which a base station and a user equipment (UE) each have a number of antennas, and may form a spatial beam with narrow directivity by beamforming to provide a strong power coverage in a specific direction, thereby countering large path losses existing in a high-frequency channel. A set of beams with different transmitting directions are used to achieve coverage of a cell. In order to improve reception quality of signals of the beams, the base station and the UE need to select a beam that matches the channel direction as much as possible. Typically, the base station and the UE may select and manage beams through beam training.

According to R16 standard of 5G new radio (5G NR), the base station employs different mechanisms to indicate beams determined for a control channel and a data channel to the UE. Specifically, a beam for a downlink or uplink control channel may be indicated using Medium Access Control (MAC) Control Element (CE), and a beam for a downlink or uplink data channel may be indicated using Downlink Control Information (DCI). This difference of the beam indications is mainly due to the following consideration: compared to the control channel, transmission over the data channel has higher requirements on reliability and is more sensitive to the beam direction, so that a more flexible and dynamic indication mechanism is required.

When wireless channel environment changes, the base station may need to reselect a transmitting beam and indicate the updated beam for the data channel, for example, by transmitting DCI. However, updating of the beam for the control channel needs to be done by transmitting the MAC CE, and is less quickly in contrast. Furthermore, even if the beams for the control channel and the data channel have the same beam direction, their updating needs to be indicated separately, which may entail an unnecessary signaling burden.

Therefore, for an application scenario where two or more different channels apply the same beam, there may be a need to implement a beam indication and update mechanism for beam sharing. However, there is no efficient method related to beam sharing in prior arts.

### SUMMARY OF THE INVENTION

The present disclosure provides aspects that relate to implementing beam sharing on various transport channels between a base station and a UE. The above-described needs may be met by applying one or more aspects of the present disclosure.

A brief summary regarding the present disclosure is given here to provide a basic understanding on some aspects of the present disclosure. However, it will be appreciated that the summary is not an exhaustive description of the present disclosure. It is not intended to identify key portions or important portions of the present disclosure, nor to limit the scope of the present disclosure. It aims at merely describing some concepts about the present disclosure in a simplified form and serves as a preorder of a more detailed description to be given later.

According to one aspect of the present disclosure, there is provided an electronic device on side of a base station, comprising a processing circuitry configured to: determine a first beam for a first transport channel between the base station and a UE; send, to the UE, a dynamic signaling including beam indication information on the first beam, such that a beam for the first transport channel is updated to the first beam; and in a case where the updating of the beam for the first transport channel is successful, update a beam for a second transport channel and/or a reference signal between the base station and the UE to the first beam.

According to one aspect of the present disclosure, there is provided an electronic device on side of a UE, comprising a processing circuitry configured to: receive, from a base station, a dynamic signaling including beam indication information on a first beam which is determined to be used for a first transport channel between the UE and the base station; update a beam for the first transport channel to the first beam; and in a case where the updating of the beam for the first transport channel is successful, update a beam for a second transport channel and/or a reference signal between the UE and the base station to the first beam.

According to one aspect of the present disclosure, there is provided a communication method, comprising: determining a first beam for a first transport channel between a base station and a UE; sending, to the UE, a dynamic signaling including beam indication information on the first beam, such that a beam for the first transport channel is updated to the first beam; and in a case where the updating of the beam for the first transport channel is successful, updating a beam for a second transport channel and/or a reference signal between the base station and the UE to the first beam.

According to one aspect of the present disclosure, there is provided a communication method, comprising: receiving, from a base station, a dynamic signaling including beam indication information on a first beam which is determined to be used for a first transport channel between a UE and the based station; updating a beam for the first transport channel to the first beam; and in a case where the updating of the beam for the first transport channel is successful, updating a beam for a second transport channel and/or a reference signal between the UE and the base station to the first beam.

According to one aspect of the present disclosure, there is provided a non-transitory computer readable storage medium storing executable instructions which, when executed, perform any of the above communication methods.

### DESCRIPTION OF THE DRAWINGS

A better understanding of the present disclosure may be achieved by referring to a detailed description given hereinafter in connection with accompanying figures, wherein the same or similar reference signs are used to indicate the same or similar elements throughout the figures. The figures are included in the specification and form a part of the specification along with the following detailed descriptions, for further illustrating embodiments of the present disclosure and for explaining the theory and advantages of the present disclosure. Wherein,
FIG. 1 schematically illustrates beams that may be used by a base station and a UE;
FIG. 2 illustrates a schematic diagram of the beam sharing according to a first embodiment;
FIG. 3 is a configuration diagram illustrating a TCI state;
FIG. 4 illustrates a MAC CE used to activate a TCI state for a data channel;
FIG. 5 illustrates DCI for scheduling a data channel;
FIG. 6 illustrates a schematic diagram of the beam sharing according to a second embodiment;
FIGS. 7A and 7B illustrate schematic diagrams of the beam sharing according to a third embodiment;
FIG. 8 is a diagram illustrating a configuration of PUCCH spatial relation information;
FIG. 9 illustrates a schematic diagram of the beam sharing according to a fourth embodiment;
FIG. 10 illustrates a MAC CE used to activate a TCI state for a control channel;
FIG. 11 shows a schematic diagram of the beam sharing according to a fifth embodiment;
FIG. 12 illustrates a MAC CE for activating PUCCH spatial relation information for a control channel;
FIGS. 13A and 13B illustrate an electronic device on the base station side and a communication method thereof according to an embodiment;
FIGS. 14A and 14B illustrate an electronic device on the UE side and a communication method thereof according to embodiment;
FIG. 15 illustrates a first example of schematic configuration of the base station according to the present disclosure;
FIG. 16 illustrates a second example of schematic configuration of the base station according to the present disclosure;
FIG. 17 illustrates an example of schematic configuration of a smart phone according to the present disclosure; and
FIG. 18 illustrates an example of schematic configuration of an automobile navigation device according to the present disclosure.

Further features and aspects of the present disclosure will become apparent from the following description with reference to the attached drawings.

### DETAILED DESCRIPTION OF PREFERRED EMBODIMENTS

Various illustrative embodiments of the present disclosure will be described hereinafter with reference to the drawings. For purpose of clarity and simplicity, not all implementations of the embodiments are described in the specification. Note that, however, many settings specific to the implementations may be made in practicing the embodiments of the present disclosure according to specific requirements, so as to achieve specific goals of the developers, such as for compliance with constraints related to a device and a service, which may vary from implementation to implementation.

**In** addition, to avoid obscuring the present disclosure with unnecessary details, the figures illustrate only steps of a process and/or components of a device that are closely related to technical solutions according to the present disclosure, while other details that have little relation to the present disclosure are omitted.

For convenient explanation of the technical solutions of the present disclosure, various aspects of the present disclosure will be described below in context of the 5G NR. However, it should be noted that this is not a limitation on the scope of application of the present disclosure. One or more aspects of the present disclosure can also be applied to various existing wireless communication systems, such as the 4G LTE/LTE-A, or various wireless communication systems to be developed in future. The architecture, entities, functions, processes and the like as described in the following description are not limited to those in the NR communication system, and can be found in other communication standards.

### [Overview]

In a wireless communication system such as the 5G NR, both of a base station and a UE may employ the large-scale antenna technology such as Massive MIMO. To support the application of the MIMO technology, both of the base station and the UE have many antennas, for example, tens, hundreds or even thousands of antennas. With respect to an antenna model, a mapping relationship of three layers is generally defined around antennas, so that the antenna model can smoothly support a channel model and the communication standard.

The bottom layer is the most basic physical unit, antennas, which can also be called antenna elements. Each of the antenna elements radiates an electromagnetic wave according to respective amplitude parameter and phase parameter.

The antenna elements are arranged as one or more antenna arrays in a form of matrix. An antenna array may be composed of antenna elements in a single row, a single column, multiple rows or multiple columns. At this level, each antenna array actually constitutes a Transceiver Unit (TXRU). Each TXRU can be independently configured. Adjustment of an antenna pattern of the TXRU is realized by configuring the amplitude parameters and/or the phase parameters of the antenna elements forming the TXRU, and electromagnetic wave radiations emitted by all the antenna elements in the antenna array form a narrow beam pointing to a specific spatial direction, that is, beam forming is realized.

The TXRU and its antenna elements can be configured in various correspondence, so as to change capability and characteristics of the beamforming. From a perspective of the TXRU, a single TXRU may contain only a single row or column of antenna elements, as a so-called one-dimensional TXRU, in which case the TXRU can only adjust a beam direction in one dimension; a single TXRU may also contain multiple rows or multiple columns of antenna elements, as a so-called two-dimensional TXRU, in which case the TXRU is able to steer the beam in both of horizontal and vertical dimensions. From a perspective of the antenna element, for example, a column of antenna elements may form a plurality of TXRUs, but the formation may be by partial connection, that is, each of the TXRU forms a beam using only a part of the antenna elements; or by full connection, that is, each of the TXRUs may adjust all antenna elements to form a beam.

Finally, one or more TXRUs construct an Antenna Port seen at the system level through logical mapping. The TXRU is equivalent to the antenna port when a one-to-one mapping relationship is adopted between the TXRU and the antenna port. Of course, two or more TXRUs may collectively constitute one antenna port, depending on the system configuration.

The antenna port may be characterized by a reference signal. There is one-to-one correspondence between the antenna port and its reference signal, and different antenna ports are used for transmitting different reference signals. The reference signal includes, for example, Synchronization Signal Block (SSB), Channel State Information Reference Signal (CSI-RS), Sounding Reference Signal (SRS), or the like.

A quasi-co-located (QCL) relationship may exist between different antenna ports. Two antenna ports are considered to be quasi co-located if a large-scale property of a channel carrying symbols on one antenna port can be inferred from a channel carrying symbols on another antenna port. This means that when, for example, the QCL relationship is satisfied between Antenna Port A and Antenna Port B, large-scale property parameters of the channel estimated from signals on Antenna Port A are also applicable to signals on Antenna Port B. The large-scale property includes at least one of: delay spread, doppler shift, average gain, average delay, and spatial reception parameters, etc. In particular, if Antenna Port A and Antenna Port B have a QCL relationship with respect to spatial reception parameters, the receiving side may use the same spatial reception parameters to achieve reception of signals on both antenna ports.

As used in this disclosure, the term "spatial reception parameters" includes beamforming parameters for receiving electromagnetic wave radiation signals formed into a beam from a particular spatial direction. The beamforming parameters may for example comprise phase parameters and/or amplitude parameters of antenna elements of an antenna array. The electromagnetic wave radiations emitted by the antenna elements are spatially combined into a desired beam according to the corresponding beamforming parameters. The antenna array configured with particular spatial reception parameters may achieve optimal reception of beam signals from a corresponding spatial direction. The spatial reception parameters may be embodied as a spatial domain receive filter. It should be understood that in this disclosure, "spatial reception parameters" may be used interchangeably with "receiving beam" formed by them. Similarly, the term "spatial transmission parameters" includes beamforming parameters for forming a transmitting beam pointing to a particular spatial direction. The spatial transmission parameters may be embodied as a spatial domain transmit filter. Also, in the present disclosure, "spatial transmission parameters" may be used interchangeably with a "transmitting beam" formed by them.

By employing the beamforming, radiated energy can be focused primarily in a particular direction to combat path loss. In order to achieve a full coverage, the base station and the UE need to have the capability of forming a number of beams pointing to different directions, and select from the beams a transmitting beam or a receiving beam that matches the channel direction as much as possible before transmitting and receiving using the beams, i.e., on the transmitting side, the transmitting beam is aligned with an angle of departure of the channel, and on the receiving side, the receiving beam is aligned with an angle of arrival of the channel.

The base station and the UE may perform the beam selection through beam training. The beam training generally includes processes such as beam measurement, beam reporting, beam indication, and the like.

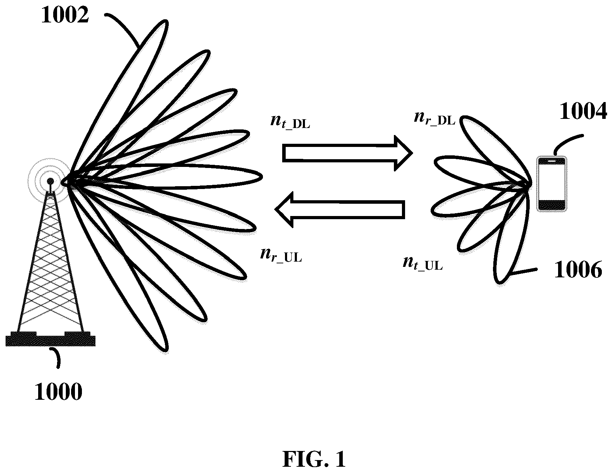

The beam training procedure in a wireless communication system is briefly described below with reference to FIG. 1. As shown in FIG. 1, the base station 1000 may use *n_{t_DL}* (*n_{t_DL}* ≥ 1) downlink transmitting beams with different directions, and the UE 1004 may use *n_{r_DL}* (*n_{r_DL}* ≥ 1) downlink receiving beams with different directions. Similarly, the base station 1000 may also use *n_{r_UL}* (*n_{r_UL}* ≥ 1) uplink receiving beams with different directions, and the UE 1004 may also use *n_{t_UL}* (*n_{t_UL}* ≥ 1) uplink transmitting beams with different directions. Although in FIG. 1, the number of the uplink receiving beams and the downlink transmitting beams 1002 for the base station 1000 and the coverage of each of the beams are the same, and the number of the uplink transmitting beams and the downlink receiving beams 1006 for the UE 1004 and the coverage of each of the beam are the same, it should be understood that this is merely exemplary, and the number and coverage of beams used by the base station and the UE may be various.

The base station 1000 and the UE 1004 traverse all combinations of the transmitting beams and the receiving beams by scanning the beams. Taking the downlink beam scanning as an example, first, the base station 1000 sends *n_{r_DL}* downlink reference signals to the UE 1004 through each of the *n_{t_DL}* transmitting beams per downlink scanning period. The *n_{t_DL}* transmitting beams may come from a beamforming codebook of the base station 1000. In this way, the *n_{t_DL}* transmitting beams of the base station 1000 sequentially transmit *n_{t_DL}* × *n_{r_DL}* downlink reference signals to the UE 1004. The reference signal resources that may be utilized by the base station 1000 include, for example, non-zero power CSI-RS (NZP-CSI-RS) resources or SSB resources.

The UE 1004 receives each of the transmitting beams separately through its *n_{r_DL}* receiving beams 1006 and performs measurement on the beam signals. For example, the UE 1004 may measure *n_{t_DL}* downlink reference signals carried in each of the transmitting beams, i.e., *n_{t_DL}* × *n_{r_DL}* downlink reference signals are measured in total. For example, the UE 1004 may measure, at the physical layer (L1), reference signal received power (L1-RSRP), reference signal received quality (L1-RSRQ), signal to interference plus noise ratio (L1-SINR), or the like.

Then, the UE 1004 reports the beam measurement results to the base station 1000. To reduce an amount of the reported data, the UE 1004 may be configured to report measurement results for only a portion of the transmitting beams (e.g., only Nr < *n_{t_DL}*, Nr is preconfigured by the base station 1000) and identification information of associated reference signals, such as CSI-RS resource indicator (CRI) or SSB resource indicator (SSBRI). Each reference signal represents a pair of transmitting beam and receiving beam due to the correspondence between the reference signal and the transmitting and receiving beams.

Based on the beam measurements as reported, the base station 1000 may select an optimal transmitting beam from the transmitting beams reported by the UE 1004 for downlink transmission with the UE 1004. In one example, the base station 1000 may select, as the optimal transmitting beam, a transmitting beam which is corresponding to a reference signal with the best measurement result, and the direction of the transmitting beam generally best matches the channel direction and corresponds to the corresponding spatial transmission parameters.

To facilitate beam reception by the UE 1004, the base station 1000 indicates the reference signal corresponding to the optimal transmitting beam to the UE 1004, whereby the UE 1004 can determine a receiving beam corresponding to the reference signal in the beam scanning process as the optimal receiving beam which matches the optimal transmitting beam. The receiving beam achieves the best reception for the optimal transmitting beam and its direction generally best matches the channel direction. The base station 1000 and the UE 1004 will then be able to use the determined optimal transmitting beam and the optimal receiving beam for the downlink transmission.

Similarly, in the uplink beam scanning process, the UE 1004 transmits *n_{r_UL}* uplink reference signals to the base station 1000 through each of its *n_{t_UL}* transmitting beams. In this way, the base station 1000 transmits *n_{t_UL}* × *n_{r_UL}* uplink reference signals in total through the *n_{r_UL}* receiving beams thereof. The base station 1000 measures the *n_{t_UL}* × *n_{r_UL}* uplink reference signals, for example, measures L1-RSRP, L1-RSRQ, L1-SINR or the like, so as to determine the optimal uplink transmitting beam for the UE 1004, as well as the optimal uplink receiving beam for the base station 1000 which matches the optimal uplink transmitting beam. The base station 1000 indicates the corresponding reference signal to the UE 1004 so that the UE 1004 can utilize the determined optimal transmitting beam for uplink transmission.

When the wireless channel environment changes, for example due to movement of the UE 1004, the current transmitting beam-receiving beam pair may not accommodate the wireless channel direction any longer. In this case, the beam training process described above may be repeated to update the transmitting beam-receiving beam pair.

Different beam indication mechanisms may be employed depending on whether the transport channel is a control channel or a data channel. For a data channel such as a Physical Downlink Shared Channel (PDSCH) or a Physical Uplink Shared Channel (PUSCH), the base station 1000 may transmit DCI indicating the selected beam to the UE 1004 through a Physical Downlink Control Channel (PDCCH), whereby the UE 1004 may adjust (or otherwise update) a downlink receiving beam for the PDSCH or an uplink transmitting beam for the PUSCH. And for a control channel such as PDCCH or Physical Uplink Control Channel (PUCCH), the base station 1000 may transmit a MAC CE indicating the selected beam to the UE 1004 through the PDSCH, in order for the UE 1004 to update a downlink receiving beam for the PDCCH or an uplink transmitting beam for the PUCCH.

However, the spatial position relationship of the UE relative to the base station is certain despite the difference in the transport channels. That is, in many scenarios, the data channel has a state similar to that of the control channel, and thus its beam may also be applicable to the control channel, and vice versa. In addition, considering a symmetry between the uplink and downlink channels, a beam used for the uplink channel may also be used for the downlink channel, for example, the UE determines spatial transmission parameters corresponding to the uplink transmitting beam by using spatial reception parameters corresponding to the downlink receiving beam, or vice versa; meanwhile, the base station determines the spatial reception parameters corresponding to the uplink receiving beam by using the spatial transmission parameters corresponding to the downlink transmitting beam, or vice versa.

Based on these considerations, it is contemplated to implement beam sharing between different channels. As used in the present disclosure, "beam sharing" means that a same beam or beams symmetric in uplink and downlink are used in transmission of two or more channels or signals. By realizing the beam sharing, signaling processes for the beam selection and indication can be reduced, and efficiency of the beam management is improved.

For a thorough understanding of the present disclosure, embodiments according to the present disclosure will be described in detail below.

### [First Embodiment]

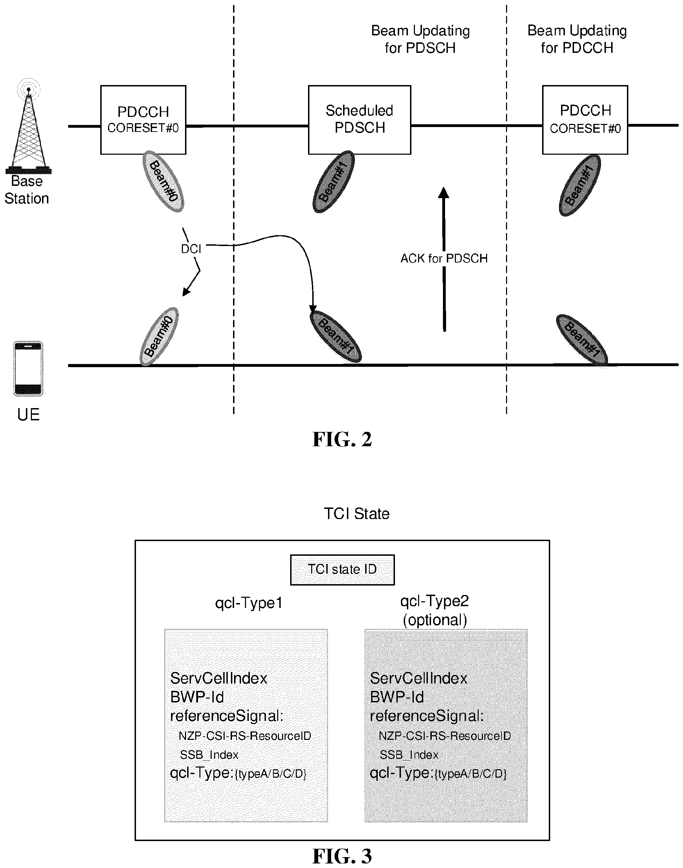

FIG. 2 illustrates a schematic diagram of the beam sharing according to a first embodiment. The first embodiment relates to DCI-based downlink beam indication.

When the base station has data to be transmitted to the UE, the base station may schedule a PDSCH by sending DCI. The DCI is carried by a PDCCH, and includes information such as a DCI format identifier, a carrier indicator, a bandwidth part (BWP) indicator and the like, and time-frequency resource information (such as a frequency-domain resource assignment field, a time-domain resource assignment field) allocated for the PDSCH. The PDCCH carrying the DCI occupies one control resource set (e.g., CORESET #0 illustrated in FIG. 2) by itself, and a beam for the PDCCH is activated per CORESET by the base station using MAC CE, and the following embodiment will introduce details of the beam indication for the control channel. As shown in FIG. 2, it is assumed that the PDCCH (CORESET #0) scheduling the PDSCH uses Beam #0. In the present disclosure, for convenience of explanation, a beam of the base station and a beam of the UE used for transmission of a certain channel are sometimes collectively referred to as a beam for the channel, for example, in FIG. 2, a downlink transmitting beam used by the base station to transmit the PDCCH and a downlink receiving beam used by the UE to receive the PDCCH are both represented by Beam #0, and the pair of transmitting beam and receiving beam are matched with each other and are characterized by the same reference signal (i.e., a reference signal associated with Beam #0).

In addition, the DCI may further include information on a beam scheduled for the PDSCH. For example, the beam scheduled for use with the PDSCH may be determined by the beam scanning procedure as described above in order to accommodate the current wireless channel environment. Typically, the beam indication for the PDSCH can be achieved by setting a Transmission Configuration Indication (TCI) state in the DCI.

The beam indication procedure for a data channel such as PDSCH or PUSCH is briefly introduced here. First, the base station may preconfigure a TCI state pool including a maximum of M (e.g., 64 or 128) TCI states for the UE through Radio Resource Control (RRC) signaling. FIG. 3 is a configuration diagram illustrating the TCI state. As shown in FIG. 3, the TCI state is identified by a TCI state ID. Each TCI state contains parameters for configuring quasi co-location (QCL) relationship between one or two downlink reference signals and a DMRS port of a PDCCH or PDSCH. For a first downlink reference signal, the quasi co-location relationship is configured by a RRC layer parameter *qcl-Typel.* If there is a second downlink reference signal, then the quasi co-location relationship is configured by an optional *qcl-Type2.* As shown in FIG. 3, the parameter *qcl-Typel* or *qcl-Type2* includes the following information:
- a serving cell index (*ServCellIndex*) representing an applicable serving cell;
- a bandwidth part ID *(BWP-ID)* representing an applicable downlink bandwidth part;
- a reference signal (*referenceSignal*) representing a reference signal resource providing the QCL information, including an NZP-CSI-RS resource identified by *NZP-CSI-RS-ResoureId* and a SSB resource identified by *SSB-Index;*
- QCL Type (*qcl-Type*) representing quasi co-location Type corresponding to the listed downlink reference signal. Depending on the large-scale property of the wireless channel that needs to be inferred, the QCL Type *qcl-Type* involved in the TCI state may include the following options: - "typeA": with respect to {doppler shift, doppler spread, average delay, delay spread}; - "typeB": with respect to {doppler shift, doppler spread}; - "typeC": with respect to {doppler shift, average delay}; - "typeD": with respect to the spatial reception parameters. For avoidance of ambiguity, each TCI state typically is allowed to include only one QCL hypothesis of "typeD".

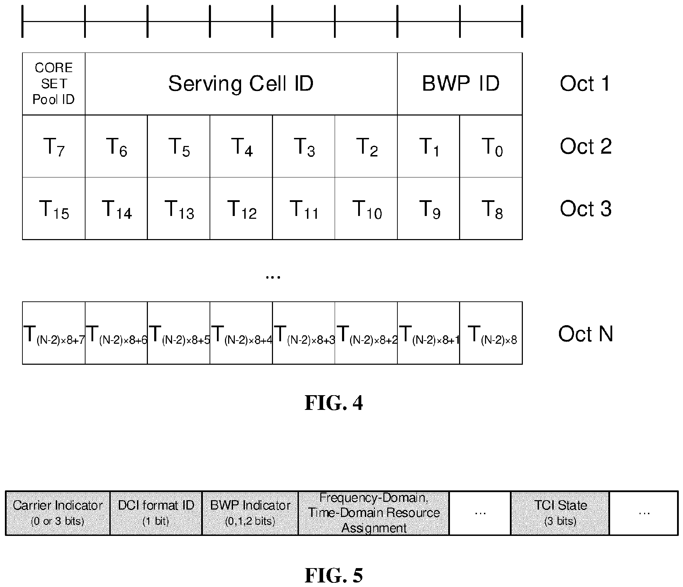

Subsequently, the base station may send a MAC CE to the UE through a PDSCH to activate up to 8 TCI states in the TCI state pool configured for the UE. FIG. 4 illustrates a format of the MAC CE for activating the TCI states (without a header). As shown in FIG. 4, a field "CORESET Pool ID" indicates a CORESET pool where the PDCCH is located, and occupies 1 bit; "Serving Cell ID" indicates a serving cell to which the MAC CE is applicable, and occupies 5 bits; "BWP ID" indicates a downlink bandwidth part to which the MAC CE is applicable, and occupies 2 bits; "Tᵢ" denotes activation information of the configured TCI state pool, occupies 1 bit, and if set to 1, indicates that the corresponding TCI state is activated, otherwise indicates that the corresponding TCI state is not activated.

Finally, the base station may indicate the beam scheduled for the PDSCH by specifying one TCI state in the DCI.

FIG. 5 illustrates a DCI format that may be used to specify a TCI state, such as DCI format 1_1 or 1_2 specified by 3GPP R16. As shown in FIG. 5, in addition to information on a DCI format, a component carrier, BWP, time-frequency resources and the like, the DCI may contain an identification field of the TCI state, which occupies 3 bits for indicating one of up to 8 TCI states as activated. On the UE side, when receiving such DCI on the PDCCH, the UE extracts the identification field of the TCI state therefrom, finds the corresponding TCI state, and makes the following QCL hypothesis: the antenna port for the reference signal listed in the TCI state has a QCL relationship with respect to the spatial reception parameters with the antenna port for the transport channel or reference signal for which the TCI state is indicated, so that the spatial reception parameters (i.e., the beam) used for the former will be available for the latter.

Returning now to FIG. 2, it is assumed that the beam scheduled for the PDSCH by the base station is Beam #1, which may be the beam having the best transmission performance in the beam scanning. The base station may indicate one TCI state in the DCI, where the TCI state contains QCL information on the reference signal associated with Beam #1.

On the UE side, the UE first blindly detects the PDCCH using Beam #0 (downlink receiving beam) corresponding to CORESET #0 to receive the DCI carried therein. If the DCI is successfully received, the UE extracts various scheduling information for the PDSCH therefrom, such as the time-frequency resource information and the like. In particular, the UE may find the TCI state indicated in the DCI and understand that the beam indicated by the TCI state (i.e., Beam #1) should be used as the beam for receiving the scheduled PDSCH, i.e., the downlink receiving beam associated with the reference signal contained in the TCI state.

Note that there is generally no HARQ feedback mechanism for DCI. That is, the base station does not know whether the transmitted DCI has been successfully received by the UE or not, and thus whether the UE has updated the beam for receiving the PDSCH or not.

In this regard, the UE may employ an implicit way to feed back whether the UE has received the DCI and whether the beam for the PDSCH has been updated successfully. Specifically, on the time-frequency resources scheduled by the DCI, the base station transmits the PDSCH using the downlink transmitting beam of Beam #1, and the PDSCH is received using the downlink receiving beam of Beam #1 and decoded by the UE. If the decoding is correct, a positive feedback (ACK) is sent to the base station through the PUCCH, otherwise a negative feedback (NACK) is sent. In response to receiving the ACK, the base station will know that the UE has updated the beam for the PDSCH to Beam #1, and the reliability of Beam #1 is verified.

Next, in response to determining that the beam updating for the PDSCH is complete, the base station and the UE may share the beam for the PDSCH to other channels. This is because the successful transmission of the PDSCH indicates that its beam is of the best quality in terms of timeliness. Therefore, according to the first embodiment of the present disclosure, the base station and the UE may update Beam #0 for the PDCCH (CORESET #0) scheduling the PDSCH to Beam #1, for example.

According to the first embodiment, the beam updating for the PDCCH can be performed autonomously on the sides of the base station and the UE, that is, the UE performs the updating of the downlink receiving beam for the PDCCH after a certain time interval elapses since the correct decoding of the PDSCH, and the base station performs the updating of the downlink transmitting beam for the PDCCH after a certain time interval elapses since the reception of the ACK for the PDSCH, thereby the signaling overhead and the time delay dedicated to beam updating for the PDCCH are omitted.

Subsequently, if the base station schedules a PDSCH again with CORESET #0, the base station will be able to transmit a PDCCH carrying DCI with the updated Beam #1, and the UE will be able to receive the DCI with the updated Beam #1.

On the other hand, if the PDSCH shown in FIG. 2 is not successfully decoded, the UE will send a NACK to the base station, so both of the base station and the UE can know that the downlink data transmission was not successful, possibly because the scheduled Beam #1 has a degraded quality or is blocked to some extent, i.e., the reliability of Beam #1 is not verified. Therefore, the base station and the UE do not update the beam for the PDCCH temporarily.

After receiving the NACK for the PDSCH, the base station may perform rescheduling of the PDSCH content, that is, transmit further DCI using Beam #0 again, where the DCI includes the reallocated time-frequency resources and beam. Here, depending on a scheduling policy on the base station side, the beam indicated in the DCI may be the previous Beam #1 or a new beam. The following processes are similar to those described above and will not be described herein. If the rescheduled PDSCH is decoded correctly, the base station and UE can still update the beam for the PDCCH to that indicated in the DCI.

According to the first embodiment, the beam for the PDCCH can follow the beam for the PDCCH, thereby the beam sharing between the two channels is implemented. It should be understood that, although the above is described by taking the PDSCH scheduling based on DCI as example, the DCI may also trigger or schedule a downlink reference signal, such as CSI-RS, and therefore, the first embodiment may also implement the beam sharing between the PDCCH and the downlink reference signal under a similar principle, and is not described herein again.

### [Second Embodiment]

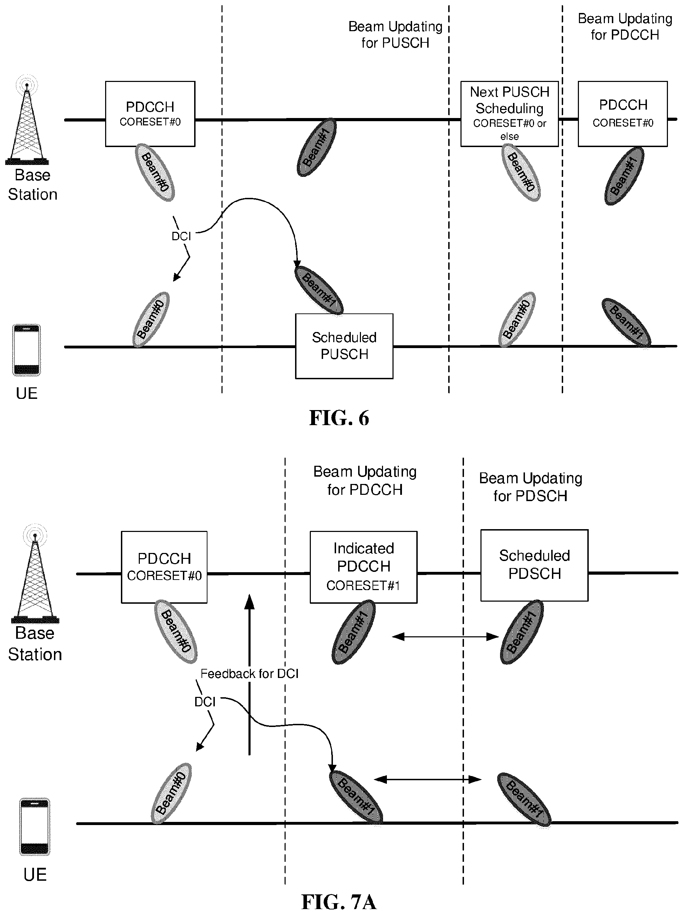

FIG. 6 shows a schematic diagram of the beam sharing according to a second embodiment. The second embodiment relates to DCI-based uplink beam indication.

When the UE has data to be transmitted to the base station, the UE may request the base station to schedule resources for transmission of a PUSCH by transmitting a Scheduling Request (SR) or a Buffer Status Report (BSR) to the base station. The base station may allocate time-frequency resources according to amount of the data to be transmitted by the UE and determine a beam for the PUSCH. For example, the beam scheduled for the PUSCH may be determined by the beam scanning procedure as described above, in order to accommodate the current wireless channel environment.

The base station may schedule the PUSCH by transmitting DCI, where the available DCI may be, for example, DCI format 0_1. As shown in FIG. 5, the DCI includes information such as a DCI format identifier, a carrier indicator, a bandwidth part (BWP) indicator and the like, and also includes time-frequency resource information (such as a frequency-domain resource assignment field, a time-domain resource assignment field) and beam information allocated to the PUSCH. The PDCCH carrying the DCI occupies one set of control resources (e.g., CORESET #0 illustrated in FIG. 6) by itself, and it is assumed that the beam activated for the PDCCH on CORESET #0 is Beam #0.

The base station may determine a beam for the PUSCH, such as Beam #1 shown in FIG. 6, for example, by the beam scanning procedure as described above, and Beam #1 may be a beam having the best transmission performance in the beam scanning procedure. The base station may indicate one TCI state including QCL information on a reference signal associated with beam #1 in DCI, and transmit the DCI to the UE using Beam #0 (downlink transmitting beam).

On the UE side, the UE first blindly detects the PDCCH using Beam #0 (downlink receiving beam) corresponding to CORESET #0 to receive the DCI carried therein. If the DCI is successfully received, the UE extracts various scheduling information about the PUSCH therefrom, such as the time-frequency resource information and the like. In particular, the UE may find the TCI state indicated in the DCI and understand that the beam indicated by this TCI state (i.e., Beam #1) should be used as the beam for transmitting the scheduled PUSCH, i.e., the uplink transmitting beam associated with the reference signal contained in the TCI state.

The UE does not need to perform HARQ feedback for the reception of the DCI, but directly transmits the PUSCH on the time-frequency resources scheduled by the DCI by using the uplink transmitting beam of Beam #1. The PUSCH may be received using the uplink receiving beam of Beam #1 and decoded by the base station.

Unlike the PDSCH transmission, the base station does not send an explicit HARQ feedback for the PUSCH to the UE. On the contrary, if the decoding of the current PUSCH is correct, the base station may continue to perform the next PUSCH scheduling for the UE to implicitly confirm that the current PUSCH has been successfully received. The next PUSCH scheduling may be performed through the PDCCH on the original CORESET #0, in which case the DCI for scheduling the next PUSCH is still transmitted through Beam #0. Alternatively, the next PUSCH scheduling may also be done through a PDCCH on another CORESET, in which case, the DCI for scheduling the next PUSCH scheduling may be transmitted through a beam associated with the corresponding CORESET. However, in any case, the DCI for scheduling the next PUSCH needs to include the same HARQ process ID, as well as an inverted New Data Indicator (NDI) field, for example, which will be assigned with a value of '1' for the next PUSCH if it is assigned with a value of '0' for the current PUSCH, so that the UE will know that the previous PUSCH transmission has been correctly received and decoded, and a new uplink data transmission can be performed using the same HARQ process.

In such implicit manner, both of the base station and the UE can confirm that the PUSCH transmission with the updated Beam #1 in FIG. 6 is successful, that is, the beam updating for the PUSCH on both sides of the base station and the UE is completed, and the reliability of Beam #1 is verified.

Next, in response to determining that the beam updating for the PUSCH is complete, the base station and the UE may share the beam for the PUSCH to other channels because the successful transmission of the PUSCH indicates that its beam has the best quality in terms of timeliness. Therefore, according to the second embodiment of the present disclosure, the base station and the UE may update Beam #0 for the PDCCH (CORESET #0) scheduling the PUSCH to Beam #1, for example. The symmetry in the uplink and downlink channels of the PUSCH and the PDCCH is considered here, that is, the UE may use the uplink transmitting beam for the PUSCH as the downlink receiving beam for the PDCCH, and the base station may use the uplink receiving beam for the PUSCH as the downlink transmitting beam for the PDCCH.

According to the second embodiment, the beam updating for the PDCCH can be performed autonomously on the base station side and on the UE side, thereby the signaling overhead and delay dedicated to beam updating of the PDCCH are omitted.

Subsequently, if the base station schedules the PUSCH again with CORESET #0, the base station will be able to transmit a PDCCH carrying DCI with the updated Beam #1, and the UE will be able to receive the DCI with the updated Beam #1.

On the other hand, if the PUSCH shown in FIG. 6 is not successfully received, the base station may reschedule the PUSCH as an implicit negative feedback. The base station transmits further DCI using Beam #0 again, where the DCI includes time-frequency resources and a beam as reallocated, and here, depending on a scheduling policy on the base station side, the beam indicated in the DCI may be previous beams Beam #1 or a new beam. In addition, the DCI rescheduling the PUSCH includes the same HARQ process ID, as well as a non-inverted NDI to instruct the UE to perform data retransmission. At this time, both of the base station and the UE know that the previous uplink data transmission was not successful, possibly because the scheduled Beam #1 is degraded in quality or blocked to some extent, that is, the reliability of Beam #1 is not verified. Therefore, the base station and the UE do not update the beam for the PDCCH temporarily.

The following processes are similar to those described above and will not be described herein. If the rescheduled PUSCH is decoded correctly, the base station and UE may still update the beam for PDCCH to that indicated in DCI.

It should be noted that, in addition to the above-mentioned TCI state, the beam for PUSCH may be indicated with Spatial Relation information (Spatial Relation Info). Similar to the TCI state, the spatial relation information also includes identification information of a reference signal with which the indicated transport channel (or reference signal) shall have a QCL relationship, such as SSB _Index, NZP-CSI-RS-ResourceId, SRS-ResourceId, or the like. The spatial relation information and the TCI state are the same in terms of nature and function, and may be used interchangeably in applicable scenarios.

According to the second embodiment, the beam for the PDCCH can follow the beam for PUSCH, thereby the beam sharing between the two channels is implemented. It should be understood that, although the above is described by taking the PUSCH scheduling based on DCI as example, the DCI may also trigger or schedule an uplink reference signal, such as SRS, and therefore, the second embodiment may also implement the beam sharing between the PDCCH and the uplink reference signal under a similar principle, and is not described herein again.

### [Third Embodiment]

The DCI involved in the above first and second embodiments has a function of data scheduling. However, DCI of other formats may not perform any data scheduling, but plays merely a role of signaling. A third embodiment of the present disclosure would ignore the data scheduling of DCI, but instead use dynamic signaling of the DCI to implement beam indication.

FIG. 7A shows a schematic diagram of an example of the beam sharing according to the third embodiment. As shown in FIG. 7A, the base station may transmit DCI through a PDCCH on CORESET #0 to indicate a beam for a PDCCH on another CORESET (e.g., CORESET #1 illustrated in FIG. 7A). It is assumed that the beam activated for the PDCCH on CORESET #0 is Beam #0.

The base station may determine the beam for the PDCCH on CORESET #1, such as Beam #1 shown in FIG. 7A, through the beam scanning procedure as described above, and Beam #1 may be the beam having the best transmission performance in the beam scanning. The base station may include a TCI state in DCI, the TCI state including QCL information about a reference signal associated with Beam #1. Preferably, the DCI may further include identification information of CORESET #1, so that the UE knows that Beam #1 is indicated for this CORESET.

On the UE side, the UE first blindly detects the PDCCH using Beam #0 (downlink receiving beam) corresponding to CORESET #0 to receive the DCI carried therein. If the DCI is successfully received, the UE finds the included TCI state therefrom, and understands that the beam indicated by the TCI state (i.e., Beam #1) should be used as the beam for receiving the PDCCH on CORESET #1.

However, a problem needs to be considered that there is no error protection for general DCI, i.e., if the UE misses or fails to detect DCI, the UE will not know the content of the DCI. If the UE does not perform feedback on success or failure of transmission of the DCI, the base station does not know whether the DCI is correctly received. This may cause the beam update information in the DCI to be not synchronized by the base station and the UE, and may cause a subsequent mismatch between the transmitting beam and the receiving beam, resulting in a disorder of the beam for the control channel.

Thus, a protection mechanism is designed here. For the DCI used according to the third embodiment, the UE uses the HARQ mechanism to inform the base station whether the DCI is correctly received. In one example, an ACK is sent to the base station if the DCI is decoded correctly by the UE, and a NACK is sent to the base station otherwise. In another example, the UE only sends a NACK to the base station when the DCI is not decoded correctly, and does not send a feedback to the base station when the DCI is decoded correctly, and if the base station receives no NACK within a certain time interval after the transmission of the DCI, the base station confirms that the DCI has been received correctly.

Through the feedback for the DCI, both of the base station and the UE can know that the beam indication undertaken by the DCI is successful, and thus complete the beam updating for the PDCCH on CORESET #1. That is, the base station updates the downlink transmitting beam of CORESET #1 to Beam #1 (downlink transmitting beam), and the UE updates the downlink receiving beam of CORESET #1 to Beam #1 (downlink receiving beam).

According to the third embodiment, in response to completion of the beam updating for the PDCCH, the base station and the UE may implement the beam sharing between the PDCCH and the PDSCH scheduled by it. Specifically, as shown in FIG. 7A, the base station and the UE may adjust the beam for the PDSCH to Beam #1. As such, the beam for the PDSCH can follow the beam for the PDSCH. It should be understood that, in addition to the PDSCH, the third embodiment may also implement the beam sharing between the PDCCH and a downlink reference signal such as CSI-RS under a similar principle, and is not described herein again.

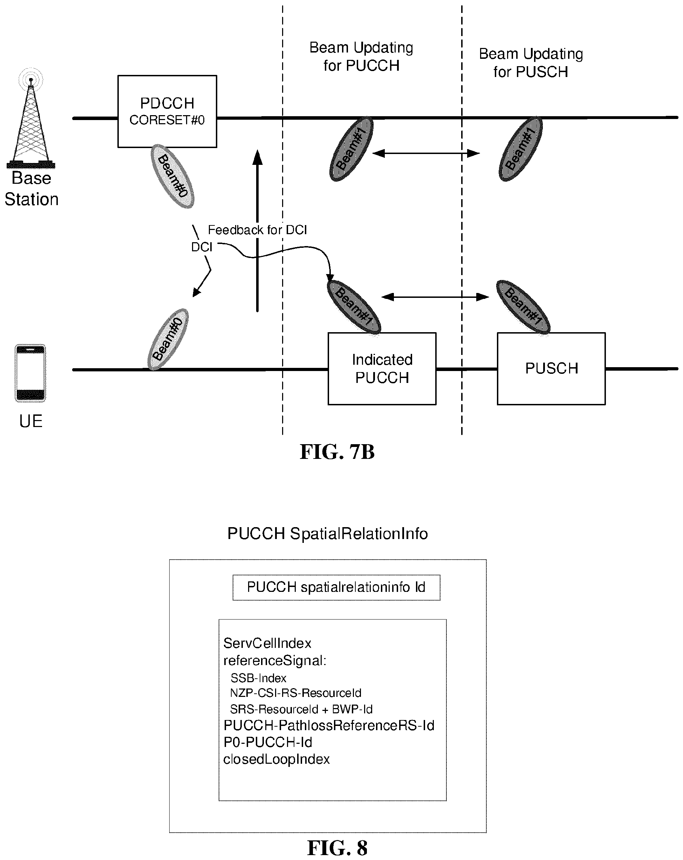

FIG. 7B is a diagram showing another example of the beam sharing according to the third embodiment. As shown in FIG. 7B, the base station may transmit DCI through the PDCCH on CORESET #0 to indicate a beam for a PUCCH. It is assumed that the beam activated for the PDCCH on CORESET #0 is Beam #0.

The base station may determine a beam for the PUCCH, such as Beam #1 shown in FIG. 7B, for example, by the beam scanning procedure as described above, and Beam #1 may be the beam having the best transmission performance in the beam scanning.

The base station may include PUCCH spatial relation information, which has a function of beam indication, in DCI. FIG. 8 shows a configuration diagram of the PUCCH spatial relation information. As shown in FIG. 8, the PUCCH spatial relation information is identified by a PUCCH spatial relation information ID (PUCCH-SpatialRelationInfoId), and includes a reference signal resource associated with Beam #1, such as a NZP-CSI-RS resource identified by *NZP-CSI-RS-ResourceId*, a SSB resource identified by *SSB-Index,* and a SRS resource collectively identified by SRS-ResourceId and BWP-ID. If SSB or NZP-CSI-RS is configured in the PUCCH spatial relation information, the UE should transmit the PUCCH with the spatial reception parameters for receiving the SSB or NZP-CSI-RS. If the SRS is configured in the PUCCH spatial relation information, the UE should transmit the PUCCH with the spatial transmission parameters for transmitting the SRS.

Preferably, the DCI may further include identification information of a PUCCH resource, so that the UE knows that Beam #1 is indicated to the PUCCH resource.

On the UE side, the UE first blindly detects the PDCCH using Beam #0 (downlink receiving beam) corresponding to CORESET #0 to receive the DCI carried therein. If the DCI is successfully received, the UE finds the included PUCCH spatial relation information therefrom, and understands that the beam indicated by the PUCCH spatial relation information (i.e., Beam #1) should be used as the beam for transmitting the PUCCH.

Likewise, the UE uses the HARQ mechanism to inform the base station whether the DCI is received correctly. In one example, an ACK is sent to the base station if the DCI is decoded correctly by the UE, and a NACK is sent to the base station otherwise. In another example, the UE only sends a NACK to the base station when DCI is not decoded correctly, and does not send a feedback to the base station when DCI is decoded correctly, and the base station confirms that DCI has been received correctly if NACK is not received within a certain time interval after the base station sent the DCI. Preferably, since the HARQ feedback is transmitted through the PUCCH or the PUSCH, the UE may consider transmitting the PUCCH or the PUSCH using the beam indicated in the DCI (Beam #1), thereby verifying reliability of the beam.

Through the feedback for the DCI, both of the base station and the UE can know that the beam indication undertaken by the DCI is successful, so that the beam updating for the corresponding PUCCH is completed. That is, the base station updates the uplink receiving beam of the PUCCH to Beam #1 (uplink receiving beam), and the UE updates the uplink transmitting beam of CORESET #1 to Beam #1 (uplink transmitting beam).

According to the third embodiment, in response to completion of the beam updating for the PUCCH, the base station and the UE can implement the beam sharing between the PUCCH and the PUSCH which is also in the uplink direction. Specifically, as shown in FIG. 7B, the base station and the UE may adjust the beam for the PUSCH to Beam #1. Thereby, the beam for the PUSCH can follow the beam for the PUCCH.

It should be noted that in addition to the above-mentioned PUCCH spatial relation information, the beam for PUSCH may be indicated with the TCI state as described above. The spatial relation information and TCI state may be used interchangeably in applicable scenarios.

It should be understood that, according to the third embodiment, the beam for an uplink reference signal, such as SRS, may also be updated with the beam for the PUCCH, so as to implement the beam sharing between them under a similar principle, and is not described herein again.

### [Fourth Embodiment]

A fourth embodiment of the present disclosure relates to beam sharing between a control channel and a downlink channel/reference signal based on MAC CE indication.

For a control channel such as PDCCH or PUCCH, its beam may be indicated by means of RRC configuration plus MAC CE activation. Specifically, the base station configures a TCI state pool for the UE through a RRC signaling, wherein the TCI state pool is configured per BWP and includes at most M (M is configured by the base station, for example, 64 or 128) TCI states.

When a beam for the control channel is determined, e.g., through the beam scanning procedure, the base station may determine a TCI state associated with the beam from the configured TCI state pool and transmit a MAC CE including identification information of the TCI state to the UE through a PDSCH.

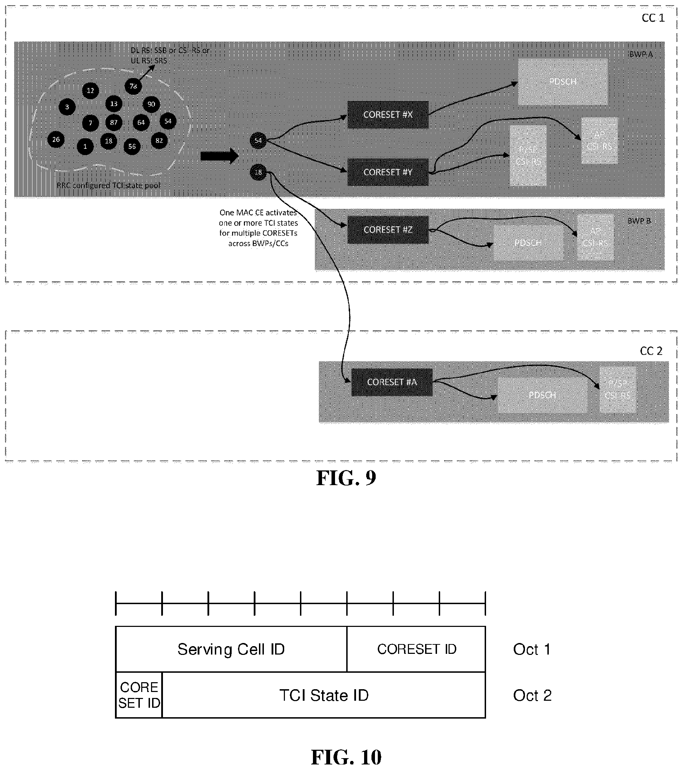

FIG. 10 shows a format of the MAC CE for activating the TCI state of the PDCCH (excluding a header). As shown in FIG. 10, "Serving Cell ID" indicates a serving cell to which the MAC CE is applicable, and occupies 5 bits; "CORESET ID" represents a CORESET where the PDCCH is located, and occupies 4 bits; "TCI State ID" denotes a TCI state associated with the beam determined for the PDCCH, and occupies 7 bits.

FIG. 9 shows a schematic diagram of the beam sharing according to the fourth embodiment. A TCI state pool configured for a UE in BWP A on a component carrier CC 1 is illustrated in FIG. 9, where the black spheres represent exemplary TCI states. It is assumed that the base station can activate or update a beam for the PDCCH on CORESET #X by indicating TCI State 54 in the MAC CE. In response to correct reception of the MAC CE on a PDSCH, the UE may feed back an ACK to the base station and update the beam for CORESET #X to the beam as indicated in TCI State 54, i.e., update the downlink receiving beam for receiving the PDCCH on CORESET #X to the beam associated with the reference signal contained in TCI State 54.

According to the fourth embodiment, the UE may update a beam for a PDSCH scheduled by the PDCCH to the beam indicated in TCI State 54, and correspondingly, the base station updates the beam for transmitting the PDSCH (downlink transmitting beam) to the beam for transmitting the PDCCH. Thereby, the base station and the UE has synchronized the beam that realizes sharing between the PDCCH and the PDSCH.

Similarly, the above-described MAC CE may also be used to implement the beam sharing between the PDCCH on CORESET #Y and a periodic/semi-static downlink reference signal (e.g., P/SP CSI-RS) scheduled by it, or between the PDCCH on CORESET #Y and an aperiodic downlink reference signal (e.g., AP CSI-RS) scheduled by it.

In addition, according to the fourth embodiment, beam sharing across BWPs, or even across Component Carriers (CCs), can also be achieved by the above procedure. As shown in FIG. 9, the MAC CE may also activate TCI State 18, thereby enabling the beam sharing between CORESET #Z in another BWP (e.g., BWP B shown in FIG. 9) of CC 1 and a PDSCH and/or CSI-RS scheduled by it, or enabling the beam sharing between CORESET #A in another CC (e.g., CC 2 shown in FIG. 9) and a PDSCH and/or CSI-RS scheduled by it.

To enable the same TCI state to indicate two or more CORESETs (which may be within the same BWP, across BWPs, or across CCs), the UE may be preconfigured with a list of CORESETs associated therewith. For example, the base station may preconfigure an association between TCI State 18 and CORESET #Z and CORESET #A, in order for the UE to understand the beam indication purpose of the MAC CE even if CORESET #Z and CORESET #A belong to different BWPs or CCs.

### [Fifth Embodiment]

A fifth embodiment of the present disclosure relates to beam sharing between a control channel and an uplink channel/reference signal based on MAC CE.

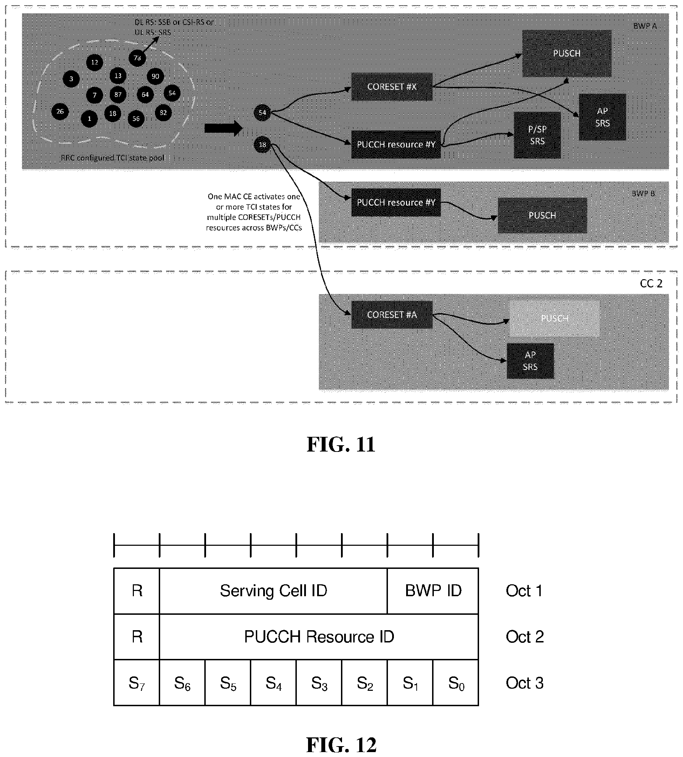

FIG. 11 shows a schematic diagram of the beam sharing according to the fifth embodiment. Similar to the fourth embodiment described with reference to FIG. 9, the base station may indicate TCI State 54 in a MAC CE to activate a PDCCH on CORESET #X. In response to correctly receiving the MAC CE on a PDSCH, the UE may feed back an ACK to the base station and update the beam for CORESET #X to the beam indicated in TCI State 54. Furthermore, the UE may update the beam for a PUSCH scheduled by the PDCCH (uplink transmitting beam) to the beam indicated in TCI State 54, and the base station may also update the beam for transmitting the PUSCH (uplink receiving beam) to the beam for transmitting the PDCCH. Thereby, the base station and the UE has synchronized the beam that realizes sharing between the PDCCH and the PUSCH.

Similarly, the above-described MAC CE may also be used to implement the beam sharing between the PDCCH (CORESET #X) and an aperiodic uplink reference signal (e.g., AP SRS) scheduled by it.

In addition, a beam for a PUCCH may also be indicated by the MAC CE. FIG. 12 shows a format of the MAC CE for TCI state activation of PUCCH (excluding a header). As shown in FIG. 12, "R" denotes a reserved field, and occupies 1 bit; "Serving Cell ID" indicates the serving cell to which the MAC CE is applicable, and occupies 4 bits; "BWP ID" represents the CORESET where the PUCCH resource is located, and occupies 3 bits; "PUCCH Resource ID" represents the PUCCH resource; "Sᵢ" represents an activation state of PUCCH spatial relation information of *PUCCH SpatialRelationInfoId* = i +1 configured to the PUCCH resource, and is set to "1" to indicate activation and "0" to indicate deactivation.

As shown in FIG. 11, it is assumed that the base station can activate or update a beam for the PUCCH on PUCCH Resource #Y by indicating TCI State 54 in the MAC CE. After the beam updating for the PUCCH is completed, the base station and the UE may update a beam for a PUSCH which is also in the uplink direction to the beam indicated in the MAC CE, thereby implementing the beam sharing between the PUCCH and the PUSCH.

Similarly, the beam sharing between the PUCCH (PUCCH Resource #Y) and a periodic/semi-static uplink reference signal (e.g., P/SP SRS) may also be achieved through TCI State 54 in the MAC CE.

In addition, according to the fourth embodiment, beam sharing across BWPs, or even across CCs, can also be achieved by the above procedure. As shown in FIG. 11, the MAC CE may also activate TCI State 18, thereby enabling the beam sharing between PUCCH Resource #Z in another BWP of CC 1 (e.g., BWP B shown in FIG. 11) and a PUSCH and/or SRS scheduled by it, or enabling the beam sharing between CORESET #A in another CC (e.g., CC 2 shown in FIG. 11) and a PUSCH and/or SRS scheduled by it.

To enable the same TCI state to indicate two or more control channels (which may be within the same BWP, across BWPs, or across CCs), a list of CORESETs and/or PUCCH resources associated therewith may be preconfigured to the UE. For example, the base station may preconfigure an association between TCI State 18 and PUCCH Resource #Z, CORESET #A in order for the UE to understand the beam indication purpose of the MAC CE.

The above first to fifth embodiments have described examples of the beam sharing according to the present disclosure. It should be understood that the present disclosure is intended to achieve the beam sharing between various transport channels and reference signals, and is not limited to the sharing combinations in the above embodiments. It should be noted that the above-described two or more channels or reference signals sharing a beam refer to channels or signals within the same Transmission Reception Point (TRP).

### [Electronic Device and Communication Method]

Next, electronic devices and communication methods according to embodiments of the present disclosure are described.

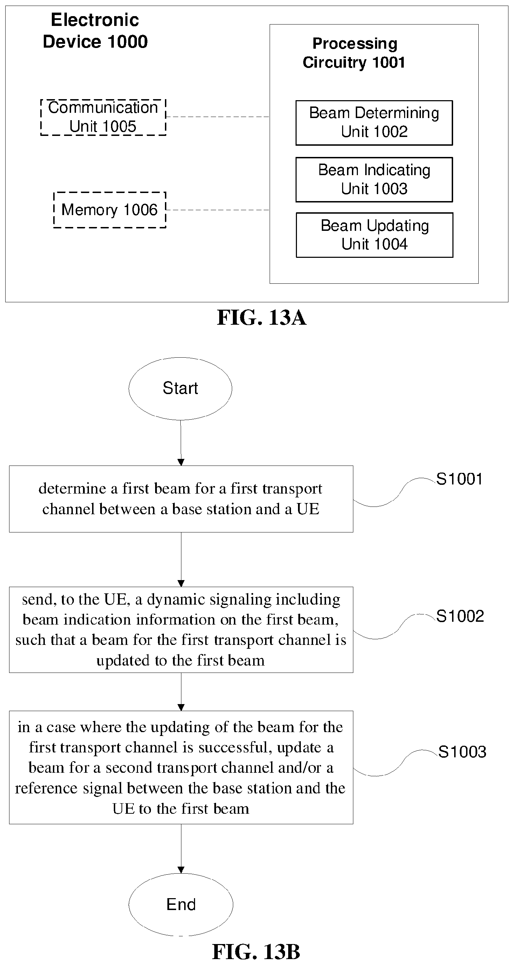

FIG. 13A is a block diagram illustrating an electronic device 1000 according to the present disclosure. The electronic device 1000 may be a base station device or a component thereof.

As shown in FIG. 13A, the electronic device 1000 includes a processing circuitry 1001. The processing circuitry 1001 includes at least a beam determining unit 1002, a beam indicating unit 1003, and a beam updating unit 1004. The processing circuitry 1001 may be configured to perform the communication method illustrated in FIG. 13B.

The beam determining unit 1002 in the processing circuitry 1001 is configured to determine a first beam for a first transport channel between the base station and the UE, that is, to perform Step S1001 in FIG. 13B. The beam determining unit 1002 may select a beam having the best transmission quality from a set of candidate beams as the first beam, for example, through a beam scanning procedure.

The beam indicating unit 1003 is configured to send a dynamic signaling containing beam indication information on the first beam to the UE, so that the beam for the first transport channel is updated to the first beam, i.e., to perform Step S1002 in FIG. 13B. The beam indicating unit 1003 may send the beam indication information through MAC CE or DCI. The beam indication information may be a TCI state or spatial relation information associated with the first beam determined by the beam determining unit 1002, depending on whether the first transport channel is an uplink channel or a downlink channel. The UE may update the beam for the first transport channel with the beam indication information.

The beam updating unit 1004 is configured to update a beam for a second transport channel and/or a reference signal between the base station and the UE to the first beam, i.e., to perform Step S1003 in FIG. 13B, in a case where the updating of the beam for the first transport channel is successful. The beam updating unit 1004 may perform the beam updating for the second transport channel or the reference signal when an explicit positive feedback or no explicit negative feedback for the dynamic signaling transmitted by the beam indicating unit 1003 is received from the UE. Alternatively, the beam updating unit 1003 may perform the beam updating for the second transport channel or the reference signal when transmission of the first transport channel with the first beam is successful.

The electronic device 1000 may further include a communication unit 1005 and a memory 1006.

The communication unit 1005 can be configured to communicate with a UE device (for example, an electronic device 2000 as described below) under control of the processing circuitry 1001. In one example, the communication unit 1005 can be implemented as a transmitter or transceiver including communication components such as an antenna array and/or radio frequency link. The communication unit 1005 is depicted with a dotted line since it can also be located externally to the electronic device 1000.

The electronic device 1000 may further include a memory 1006. The memory 1006 can store various data and instructions, programs and data for operating the electronic device 1000, various data generated by the processing circuitry 1001, data received by the communication unit 1005 and the like.

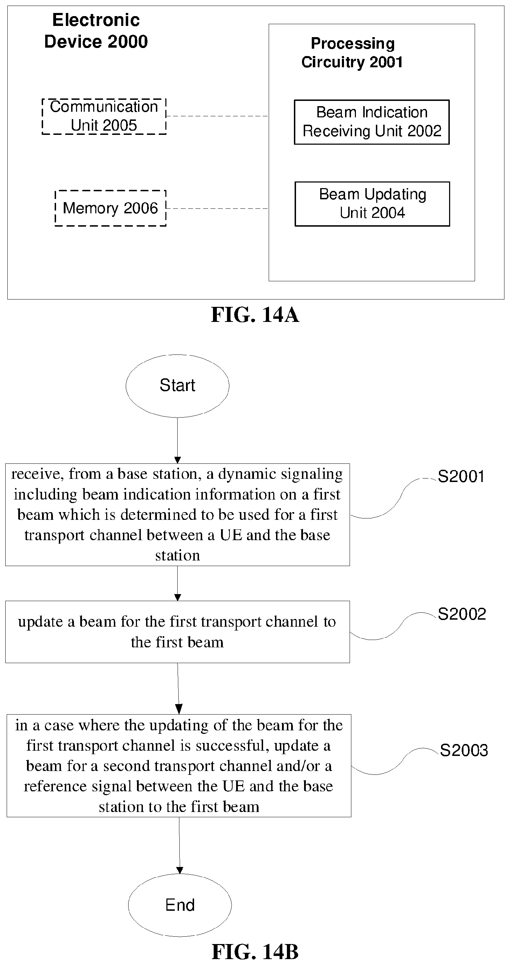

FIG. 14A is a block diagram illustrating an electronic device 2000 in accordance with the present disclosure. The electronic device 2000 may be a UE device or a component thereof.

As shown in FIG. 14A, the electronic device 2000 includes a processing circuitry 2001. The processing circuitry 2001 includes at least a beam instruction receiving unit 2002 and a beam updating unit 2003. The processing circuitry 2001 may be configured to perform the communication method illustrated in FIG. 14B.

The beam indication receiving unit 2002 of the processing circuitry 2001 is configured to receive a dynamic signaling containing beam indication information on a first beam from a base station, i.e., to perform Step S2001 in FIG. 14B. The first beam is determined for use with a first transport channel between the UE and the base station. The dynamic signaling may be DCI or MAC CE, and includes identification information of TCI state or spatial relation information as the beam indication information.

The beam updating unit 2003 is configured to update a beam for the first transport channel to the first beam indicated by the beam indication information, i.e., to perform Step S2002 in FIG. 14B.

In a case where the updating of the beam for the first transport channel is successful, the beam updating unit 2003 is further configured to update a beam for a second transport channel and/or a reference signal between the UE and the base station to the first beam, i.e., to perform Step S2002 in FIG. 14B. In one example, the beam updating unit 2003 may perform the beam updating for the second transport channel or the reference signal when the dynamic signaling is successfully received. Alternatively, the beam updating unit 2003 may perform the beam updating for the second transport channel or the reference signal when transmission of the first transport channel with the first beam is successful.

The electronic device 2000 may also include, for example, a communication unit 2005 and a memory 2006.

The communication unit 2005 may be configured to perform communication with a base station under control of the processing circuitry 2001. In an example, the communication unit 2005 may be implemented as a transmitter or transceiver, including communication components such as an antenna array and/or a radio frequency link. The communication unit 2005 is drawn with a dotted line because it can also be located outside the electronic device 2000.

The electronic device 2000 may further include a memory 2006. The memory 2006 can store various data and instructions, such as programs and data for operating the electronic device 2000, various data generated by the processing circuitry 2001, various control signaling or traffic data to be transmitted by the communication unit 2005 and the like. The memory 2006 is drawn with a dotted line because it can also be located in the processing circuitry 2001 or outside the electronic device 2000.

Various aspects of the embodiments of the present disclosure have been described in detail above, but it will be appreciated that the structure, arrangement, type, number and the like of antenna arrays, ports, reference signals, communication devices, communication methods and the like are illustrated for purpose of description, and are not intended to limit the aspects of the present disclosure to these specific examples.

It should be understood that the various units of the electronic device 1000 and 2000 described in the above embodiments are only logical modules divided according to specific functions they implement, and are not used to limit specific implementations. In an actual implementation, the foregoing units may be implemented as individual physical entities, or may also be implemented by a single entity (for example, a processor (CPU or DSP, etc.), an integrated circuit, etc.).

### [Exemplary implementations of the present disclosure]

According to the embodiments of the present disclosure, various implementations for practicing concepts of the present disclosure can be conceived, including but not limited to:
1). An electronic device on side of a base station, comprising a processing circuitry configured to: determine a first beam for a first transport channel between the base station and a UE; send, to the UE, a dynamic signaling including beam indication information on the first beam, such that a beam for the first transport channel is updated to the first beam; and in a case where the updating of the beam for the first transport channel is successful, update a beam for a second transport channel and/or a reference signal between the base station and the UE to the first beam.
2). The electronic device of 1), wherein the dynamic signaling includes downlink control information (DCI), and wherein the first transport channel is a Physical Downlink Shared Channel (PDSCH) or Physical Uplink Shared Channel (PUSCH), and the second transport channel is a Physical Downlink Control Channel (PDCCH) scheduling the PDSCH or PUSCH.
3). The electronic device of 1), wherein the dynamic signaling includes downlink control information (DCI), and wherein the first transport channel is a Physical Downlink Control Channel (PDCCH) or Physical Uplink Control Channel (PUCCH), and the second transport channel is a Physical Downlink Shared Channel (PDSCH) or Physical Uplink Shared Channel (PUSCH).
4). The electronic device of 1), wherein the dynamic signaling includes Medium Access Control (MAC) control element (CE), and wherein the first transport channel is a Physical Downlink Control Channel (PDCCH), and the second transport channel is a Physical Downlink Shared Channel (PDSCH) scheduled by the PDCCH.
5). The electronic device of 1), wherein the dynamic signaling includes Medium Access Control (MAC) control element (CE), and wherein the first transport channel is a Physical Uplink Control Channel (PUCCH), and the second transport channel is a Physical Uplink Shared Channel (PUSCH).
6). The electronic device of 2), wherein the processing circuitry is further configured to: transmit the PDSCH or receive the PUSCH with the first beam; and in a case where the transmission of the PDSCH or PUSCH is successful, confirm that the updating of the beam for the first transport channel is successful.
7). The electronic device of any of 3) - 5), wherein the processing circuitry is further configured to: in a case where an acknowledgement (ACK) for the dynamic signaling is received or a negative acknowledgement (NACK) for the dynamic signaling is not received from the UE, confirm that the updating of the beam for the first transport channel is successful.
8). The electronic device of 4) or 5), wherein the first transport channel includes one of: a plurality of transport channels within the same Bandwidth Part (BWP), a plurality of transport channels within different BWPs on the same Component Carrier (CC), or a plurality of transport channels on different CCs.
9). The electronic device of 1), wherein the beam indication information includes transmission configuration indicator (TCI) state or spatial relation information.
10). An electronic device on side of a UE, comprising a processing circuitry configured to: receive, from a base station, a dynamic signaling including beam indication information on a first beam which is determined to be used for a first transport channel between the UE and the base station; update a beam for the first transport channel to the first beam; and in a case where the updating of the beam for the first transport channel is successful, update a beam for a second transport channel and/or a reference signal between the UE and the base station to the first beam.
11). The electronic device of 10), wherein the dynamic signaling is Downlink Control Information (DCI), and wherein the first transport channel is a Physical Downlink Shared Channel (PDSCH) or Physical Uplink Shared Channel (PUSCH), and the second transport channel is a Physical Downlink Control Channel (PDCCH) scheduling the PDSCH or PUSCH.
12). The electronic device of 10), wherein the dynamic signaling is downlink control information (DCI), and wherein the first transport channel is a Physical Downlink Control Channel (PDCCH) or Physical Uplink Control Channel (PUCCH), and the second transport channel is a Physical Downlink Shared Channel (PDSCH) or Physical Uplink Shared Channel (PUSCH).
13). The electronic device of 10), wherein the dynamic signaling is Medium Access Control (MAC) control element (CE), and wherein the first transport channel is a Physical Downlink Control Channel (PDCCH), and the second transport channel is a Physical Downlink Shared Channel (PDSCH) scheduled by the PDCCH.
14). The electronic device of 10), wherein the dynamic signaling is Medium Access Control (MAC) control element (CE), and wherein the first transport channel is a Physical Uplink Control Channel (PUCCH), and the second transport channel is a Physical Uplink Shared Channel (PUSCH).
15). The electronic device of 11), wherein the processing circuitry is further configured to: receive the PDSCH or transmit the PUSCH with the first beam; and in a case where the transmission of the PDSCH or PUSCH is successful, confirm that the updating of the beam for the first transport channel is successful.
16). The electronic device of any of 12) - 14), wherein the processing circuitry is further configured to: in a case where the dynamic signaling is received successfully, confirm that the updating of the beam for the first transport channel is successful, and send an acknowledgement (ACK) for the dynamic signaling or do not send a negative acknowledgement (NACK) for the dynamic signaling to the base station.
17). The electronic device of 13) or 14), wherein the first transport channel includes one of: a plurality of transport channels within the same Bandwidth Part (BWP), a plurality of transport channels within different BWPs on the same Component Carrier (CC), or a plurality of transport channels on different CCs.
18). A communication method, comprising: determining a first beam for a first transport channel between a base station and a UE; sending, to the UE, a dynamic signaling including beam indication information on the first beam, such that a beam for the first transport channel is updated to the first beam; and in a case where the updating of the beam for the first transport channel is successful, updating a beam for a second transport channel and/or a reference signal between the base station and the UE to the first beam.
19). A communication method, comprising: receiving, from a base station, a dynamic signaling including beam indication information on a first beam which is determined to be used for a first transport channel between a UE and the based station; updating a beam for the first transport channel to the first beam; and in a case where the updating of the beam for the first transport channel is successful, updating a beam for a second transport channel and/or a reference signal between the UE and the base station to the first beam.
20). A non-transitory computer readable storage medium storing executable instructions which, when executed, perform the communication method according to 18) or 19).

### [Application examples of the present disclosure]

The technology of the present disclosure can be applied to various products.

For example, the electronic device 1000 according to the embodiments of the present disclosure can be implemented as a variety of base stations or installed in a base station, and the electronic device 2000 can be implemented as a variety of user devices or installed in a user device.

The communication method according to the embodiments of the present disclosure may be implemented by various base stations or user devices; the methods and operations according to the embodiments of the present disclosure may be embodied as computer-executable instructions, stored in a non-transitory computer-readable storage medium, and can be performed by various base stations or user devices to implement one or more of the above-mentioned functions.

The technology according to the embodiments of the present disclosure can be made into various computer program products, which can be used in various base stations or user devices to implement one or more of the above-mentioned functions.

It should be noted that the term "base station" used in the present disclosure is not limited to the above two types of nodes, but serves as an example of a control device on the network side, and has the full breadth of its usual meaning. The base stations mentioned in the present disclosure can be implemented as any type of base stations, preferably, such as the macro gNB or ng-eNB defined in the 3GPP 5G NR standard. A gNB may be a gNB that covers a cell smaller than a macro cell, such as a pico gNB, micro gNB, and home (femto) gNB. Instead, the base station may be implemented as any other types of base stations such as a NodeB, eNodeB and a base transceiver station (BTS). The base station may include a main body configured to control wireless communication, and one or more remote radio heads (RRH), a wirelesss relay, a drone control tower, a control unit in an automated factory or the like disposed in a different place from the main body.

In addition, in the present disclosure, the term "UE" has the full breadth of its usual meaning, including various terminal devices or in-vehicle devices that communicate with the base station. The user device may be implemented as a mobile terminal such as a smartphone, a tablet personal computer (PC), a notebook PC, a portable game terminal, a portable/dongle type mobile router, and a digital camera apparatus, or an in-vehicle terminal such as a car navigation device. The terminal device may also be implemented as a terminal (that is also referred to as a machine type communication (MTC) terminal) that performs machine-to-machine (M2M) communication, a drone, a sensor or actuator in an automated factory or the like. Furthermore, the terminal device may be a wireless communication module (such as an integrated circuit module including a single die) mounted on each of the above terminals.

Examples of the base station and the user device in which the present disclosure can be applied will be described briefly below.

### First application example of the base station

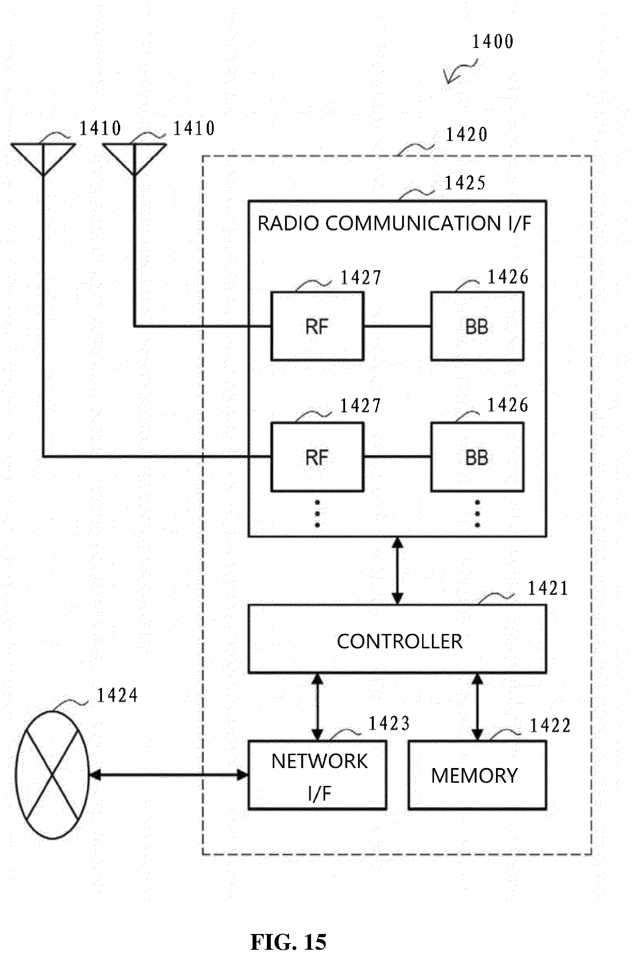

FIG. 15 is a block diagram showing a first example of a schematic configuration of a base station to which the technology of the present disclosure can be applied. In FIG. 15, the base station is implemented as gNB 1400. The gNB 1400 includes a plurality of antennas 1410 and a base station device 1420. The base station device 1420 and each antenna 1410 may be connected to each other via an RF cable. In an implementation manner, the gNB 1400 (or the base station device 1420) herein may correspond to the above-mentioned electronic device 1000.

The antennas 1410 includes multiple antenna elements, such as multiple antenna arrays for massive MIMO. The antennas 1410, for example, can be arranged into a matrix of antenna arrays, and are used by the base station device 1420 to transmit and receive wireless signals. For example, multiple antennas 1410 may be compatible with multiple frequency bands used by gNB 1400.

The base station device 1420 includes a controller 1421, a memory 1422, a network interface 1423, and a radio communication interface 1425.

The controller 1421 may be, for example, a CPU or a DSP, and operates various functions of the base station device 1420 at a higher layer. For example, the controller 1421 may include the processing circuitry 1001 as described above, perform the communication method described in FIG. 13B, or control various components of the electronic device 1000. For example, the controller 1421 generates data packets based on data in signals processed by the radio communication interface 1425, and passes the generated packets via the network interface 1423. The controller 1421 may bundle data from multiple baseband processors to generate bundled packets, and pass the generated bundled packets. The controller 1421 may have logical functions that perform controls such as radio resource control, radio bearer control, mobility management, admission control, and scheduling. The controls can be performed in conjunction with a nearby gNB or core network node. The memory 1422 includes a RAM and a ROM, and stores a program executed by the controller 1421 and various types of control data such as a terminal list, transmission power data, and scheduling data.

The network interface 1423 is a communication interface for connecting the base station device 1420 to the core network 1424. The controller 1421 may communicate with a core network node or another gNB via the network interface 1423. In this case, the gNB 1400 and the core network node or other gNBs may be connected to each other through a logical interface such as an S1 interface and an X2 interface. The network interface 1423 may also be a wired communication interface or a radio communication interface for a wireless backhaul line. If the network interface 1423 is a radio communication interface, compared with the frequency band used by the radio communication interface 1425, the network interface 1423 can use a higher frequency band for wireless communication.

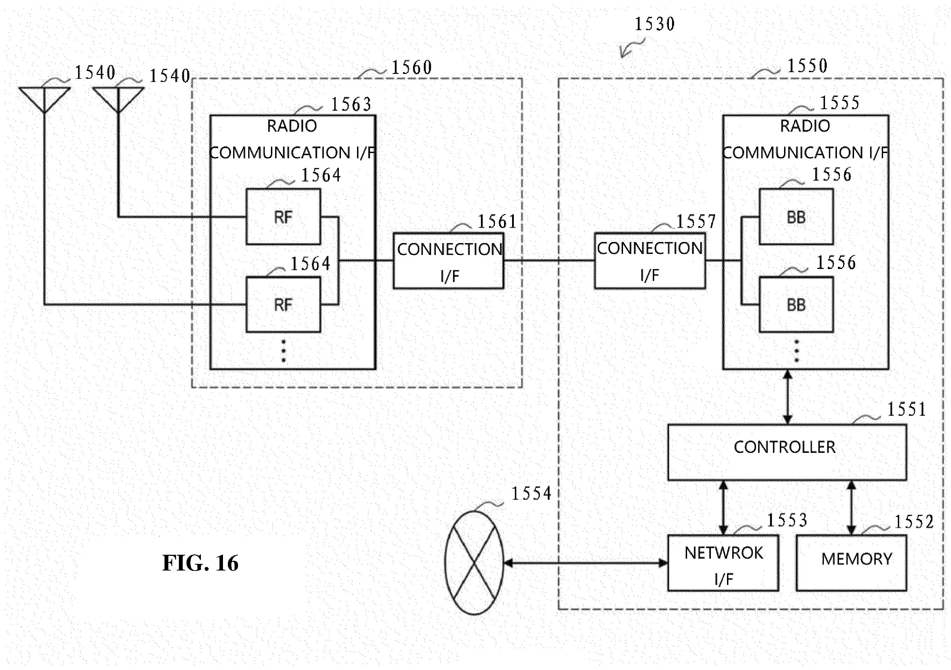

The radio communication interface 1425 supports any cellular communication scheme such as 5G NR, and provides a wireless connection to a terminal located in a cell of the gNB 1400 via an antenna 1410. The radio communication interface 1425 may generally include, for example, a baseband (BB) processor 1426 and an RF circuit 1427. The BB processor 1426 may perform, for example, encoding / decoding, modulation / demodulation, and multiplexing / demultiplexing, and execute various types of signal processing in layers such as the physical layer, the MAC layer, the RLC layer, and the PDCP layer. As an alternative of the controller 1421, the BB processor 1426 may have a part or all of the above-mentioned logical functions. The BB processor 1426 may be a memory storing a communication control program, or a module including a processor and related circuits configured to execute the program. Updating the program can change the function of the BB processor 1426. The module may be a card or a blade inserted into a slot of the base station device 1420. Alternatively, the module may be a chip mounted on a card or a blade. Meanwhile, the RF circuit 1427 may include, for example, a mixer, a filter, and an amplifier, and transmits and receives a wireless signal via the antenna 1410. Although FIG. 16 illustrates an example in which one RF circuit 1427 is connected to one antenna 1410, the present disclosure is not limited to this illustration, but one RF circuit 1427 may be connected to multiple antennas 1410 at the same time.

As shown in FIG. 15, the radio communication interface 1425 may include a plurality of BB processors 1426. For example, the plurality of BB processors 1426 may be compatible with multiple frequency bands used by gNB 1400. As shown in FIG. 15, the radio communication interface 1425 may include a plurality of RF circuits 1427. For example, the plurality of RF circuits 1427 may be compatible with multiple antenna elements. Although FIG. 15 shows an example in which the radio communication interface 1425 includes a plurality of BB processors 1426 and a plurality of RF circuits 1427, the radio communication interface 1425 may also include a single BB processor 1426 or a single RF circuit 1427.

In the gNB 1400 illustrated in FIG. 15, one or more of the units included in the processing circuitry 1001 described with reference to FIG. 13A may be implemented in the radio communication interface 1425. Alternatively, at least a part of these components may be implemented in the controller 1421. As an example, the gNB 1400 includes a part (for example, the BB processor 1426) or the entire of the radio communication interface 1425 and/or a module including the controller 1421, and the one or more components may be implemented in the module. In this case, the module may store a program (in other words, a program causing the processor to execute operations of the one or more components) causing the processor to function as the one or more components, and execute the program. As another example, a program causing the processor to function as the one or more components may be installed in the gNB 1400, and the radio communication interface 1425 (for example, the BB processor 1426) and/or the controller 1421 may execute the program. As described above, as a device including the one or more components, the gNB 1400, the base station device 1420 or the module may be provided. In addition, a readable medium in which the program is recorded may be provided.

### Second application example of base station

FIG. 16 is a block diagram showing a second example of a schematic configuration of a base station to which the technology of the present disclosure can be applied. In FIG. 16, the base station is shown as gNB 1530. The gNB 1530 includes multiple antennas 1540, base station equipment 1550, and RRH 1560. The RRH 1560 and each antenna 1540 may be connected to each other via an RF cable. The base station equipment 1550 and the RRH 1560 may be connected to each other via a high-speed line such as a fiber optic cable. In an implementation manner, the gNB 1530 (or the base station device 1550) herein may correspond to the foregoing electronic device 1000.

The antennas 1540 includes multiple antenna elements, such as multiple antenna arrays for massive MIMO. The antennas 1540, for example, can be arranged into a matrix of antenna arrays, and are used by the base station device 1550 to transmit and receive wireless signals. For example, multiple antennas 1540 may be compatible with multiple frequency bands used by gNB 1530.

The base station device 1550 includes a controller 1551, a memory 1552, a network interface 1553, a radio communication interface 1555, and a connection interface 1557. The controller 1551, the memory 1552, and the network interface 1553 are the same as the controller 1421, the memory 1422, and the network interface 1423 described with reference to FIG. 15.

The radio communication interface 1555 supports any cellular communication scheme such as 5G NR, and provides wireless communication to a terminal located in a sector corresponding to the RRH 1560 via the RRH 1560 and the antenna 1540. The radio communication interface 1555 may typically include, for example, a BB processor 1556. The BB processor 1556 is the same as the BB processor 1426 described with reference to FIG. 15 except that the BB processor 1556 is connected to the RF circuit 1564 of the RRH 1560 via the connection interface 1557. As shown in FIG. 16, the radio communication interface 1555 may include a plurality of BB processors 1556. For example, multiple BB processors 1556 may be compatible with multiple frequency bands used by gNB 1530. Although FIG. 16 shows an example in which the radio communication interface 1555 includes a plurality of BB processors 1556, the radio communication interface 1555 may also include a single BB processor 1556.

The connection interface 1557 is an interface for connecting the base station device 1550 (radio communication interface 1555) to the RRH 1560. The connection interface 1557 may also be a communication module for communication in the above-mentioned high-speed line connecting the base station device 1550 (radio communication interface 1555) to the RRH 1560.

The RRH 1560 includes a connection interface 1561 and a radio communication interface 1563.

The connection interface 1561 is an interface for connecting the RRH 1560 (radio communication interface 1563) to the base station device 1550. The connection interface 1561 may also be a communication module for communication in the above-mentioned high-speed line.

The radio communication interface 1563 transmits and receives wireless signals via the antenna 1540. The radio communication interface 1563 may generally include, for example, an RF circuit 1564. The RF circuit 1564 may include, for example, a mixer, a filter, and an amplifier, and transmits and receives wireless signals via the antenna 1540. Although FIG. 16 illustrates an example in which one RF circuit 1564 is connected to one antenna 1540, the present disclosure is not limited to this illustration, but one RF circuit 1564 may be connected to multiple antennas 1540 at the same time.

As shown in FIG. 16, the radio communication interface 1563 may include a plurality of RF circuits 1564. For example, the plurality of RF circuits 1564 may support multiple antenna elements. Although FIG. 16 shows an example in which the radio communication interface 1563 includes a plurality of RF circuits 1564, the radio communication interface 1563 may include a single RF circuit 1564.

In the gNB 1500 shown in FIG. 16, one or more units included in the processing circuitry 1001 described with reference to FIG. 13A may be implemented in the radio communication interface 1525. Alternatively, at least a part of these components may be implemented in the controller 1521. For example, the gNB 1500 includes a part (for example, the BB processor 1526) or the whole of the radio communication interface 1525, and/or a module including the controller 1521, and one or more components may be implemented in the module. In this case, the module may store a program for allowing the processor to function as one or more components (in other words, a program for allowing the processor to perform operations of one or more components), and may execute the program. As another example, a program for allowing the processor to function as one or more components may be installed in the gNB 1500, and the radio communication interface 1525 (for example, the BB processor 1526) and/or the controller 1521 may execute the program. As described above, as a device including one or more components, the gNB 1500, the base station device 1520, or a module may be provided, and a program for allowing the processor to function as one or more components may be provided. In addition, a readable medium in which the program is recorded may be provided.

### First application example of the user device

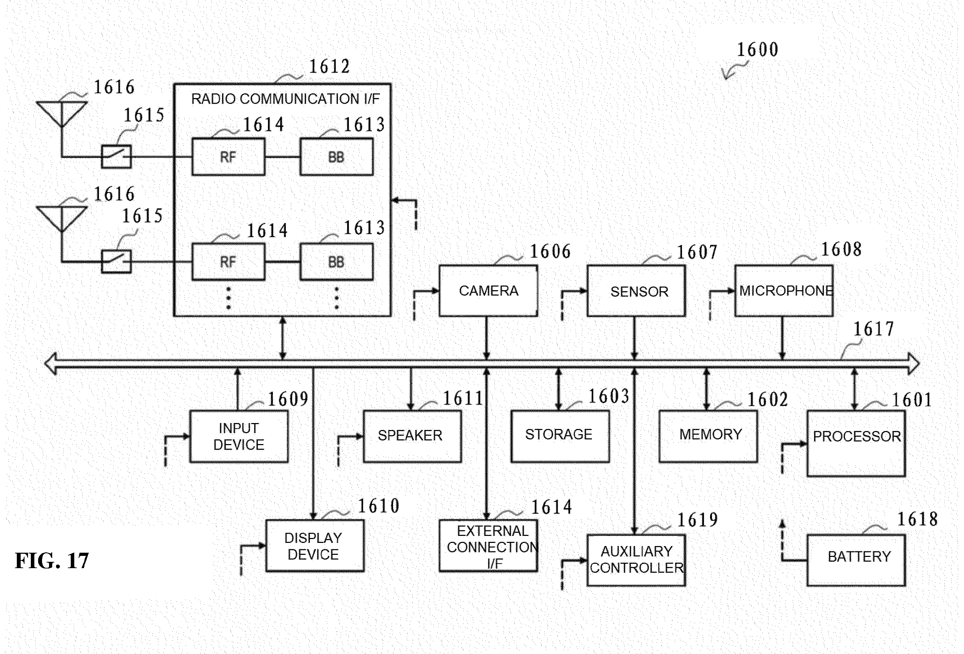

FIG. 17 is a block diagram showing an example of a schematic configuration of a smartphone 1600 to which the technology of the present disclosure can be applied. In an example, the smart phone 1600 may be implemented as the electronic device 1000 described with reference to FIG. 14A.

The smartphone 1600 includes a processor 1601, a memory 1602, a storage device 1603, an external connection interface 1604, a camera device 1606, a sensor 1607, a microphone 1608, an input device 1609, a display device 1610, a speaker 1611, a radio communication interface 1612, one or more antenna switches 1615, one or more antennas 1616, a bus 1617, a battery 1618, and an auxiliary controller 1619.

The processor 1601 may be, for example, a CPU or a system on chip (SoC), and controls functions of an application layer and another layer of the smartphone 1600. The processor 1601 may include or serve as the processing circuitry 1001 described with reference to FIG. 15A or the processing circuitry 2001 described with reference to 16A. The memory 1602 includes a RAM and a ROM, and stores data and programs executed by the processor 1601. The storage device 1603 may include a storage medium such as a semiconductor memory and a hard disk. The external connection interface 1604 is an interface for connecting external devices such as a memory card and a universal serial bus (USB) device to the smartphone 1600.

The camera device 1606 includes an image sensor such as a charge-coupled device (CCD) and a complementary metal oxide semiconductor (CMOS), and generates a captured image. The sensor 1607 may include a set of sensors such as a measurement sensor, a gyroscope sensor, a geomagnetic sensor, and an acceleration sensor. The microphone 1608 converts a sound input to the smartphone 1600 into an audio signal. The input device 1609 includes, for example, a touch sensor, a keypad, a keyboard, a button, or a switch configured to detect a touch on the screen of the display device 1610, and receives an operation or information input from a user. The display device 1610 includes a screen such as a liquid crystal display (LCD) and an organic light emitting diode (OLED) display, and displays an output image of the smartphone 1600. The speaker 1611 converts an audio signal output from the smartphone 1600 into a sound.

The radio communication interface 1612 supports any cellular communication scheme such as 4G LTE, 5G NR or the like, and performs wireless communication. The radio communication interface 1612 may generally include, for example, a BB processor 1613 and an RF circuit 1614. The BB processor 1613 may perform, for example, encoding/decoding, modulation/demodulation, and multiplexing/demultiplexing, and perform various types of signal processing for wireless communication. Meanwhile, the RF circuit 1614 may include, for example, a mixer, a filter, and an amplifier, and transmits and receives wireless signals via the antenna 1616. The radio communication interface 1612 may be a chip module on which a BB processor 1613 and an RF circuit 1614 are integrated. As shown in FIG. 17, the radio communication interface 1612 may include multiple BB processors 1613 and multiple RF circuits 1614. Although FIG. 17 illustrates an example in which the radio communication interface 1612 includes a plurality of BB processors 1613 and a plurality of RF circuits 1614, the radio communication interface 1612 may also include a single BB processor 1613 or a single RF circuit 1614.

In addition, in addition to the cellular communication scheme, the radio communication interface 1612 may support other types of wireless communication scheme, such as a short-range wireless communication scheme, a near field communication scheme, and a wireless local area network (LAN) scheme. In this case, the radio communication interface 1612 may include a BB processor 1613 and an RF circuit 1614 for each wireless communication scheme.

Each of the antenna switches 1615 switches a connection destination of the antenna 1616 between a plurality of circuits included in the radio communication interface 1612 (for example, circuits for different wireless communication schemes).

The antennas 1616 includes multiple antenna elements, such as multiple antenna arrays for large-scale MIMO. The antennas 1616, for example, can be arranged into a matrix of antenna arrays, and are used by the radio communication interface 1612 to transmit and receive wireless signals. The smart phone 1600 can includes one or more antenna panels (not shown).

In addition, the smartphone 1600 may include an antenna 1616 for each wireless communication scheme. In this case, the antenna switch 1615 may be omitted from the configuration of the smartphone 1600.

The bus 1617 connects the processor 1601, the memory 1602, the storage device 1603, the external connection interface 1604, the camera device 1606, the sensor 1607, the microphone 1608, the input device 1609, the display device 1610, the speaker 1611, the radio communication interface 1612, and the auxiliary controller 1619 to each other. The battery 1618 supplies power to each block of the smartphone 1600 shown in FIG. 17 via a feeder, and the feeder is partially shown as a dotted line in the figure. The auxiliary controller 1619 operates the minimum necessary functions of the smartphone 1600 in the sleep mode, for example.

In the smart phone 1600 shown in FIG. 17, one or more components included in the processing circuitry 2001 described with reference to FIG. 14A may be implemented in the radio communication interface 1612. Alternatively, at least a part of these components may be implemented in the processor 1601 or the auxiliary controller 1619. As an example, the smart phone 1600 includes a part (for example, the BB processor 1613) or the whole of the radio communication interface 1612, and/or a module including the processor 1601 and/or the auxiliary controller 1619, and one or more components may be Implemented in this module. In this case, the module may store a program that allows processing to function as one or more components (in other words, a program for allowing the processor to perform operations of one or more components), and may execute the program. As another example, a program for allowing the processor to function as one or more components may be installed in the smart phone 1600, and the radio communication interface 1612 (for example, the BB processor 1613), the processor 1601, and/or the auxiliary The controller 1619 can execute this program. As described above, as a device including one or more components, a smart phone 1600 or a module may be provided, and a program for allowing a processor to function as one or more components may be provided. In addition, a readable medium in which the program is recorded may be provided.

### Second application example of the user device

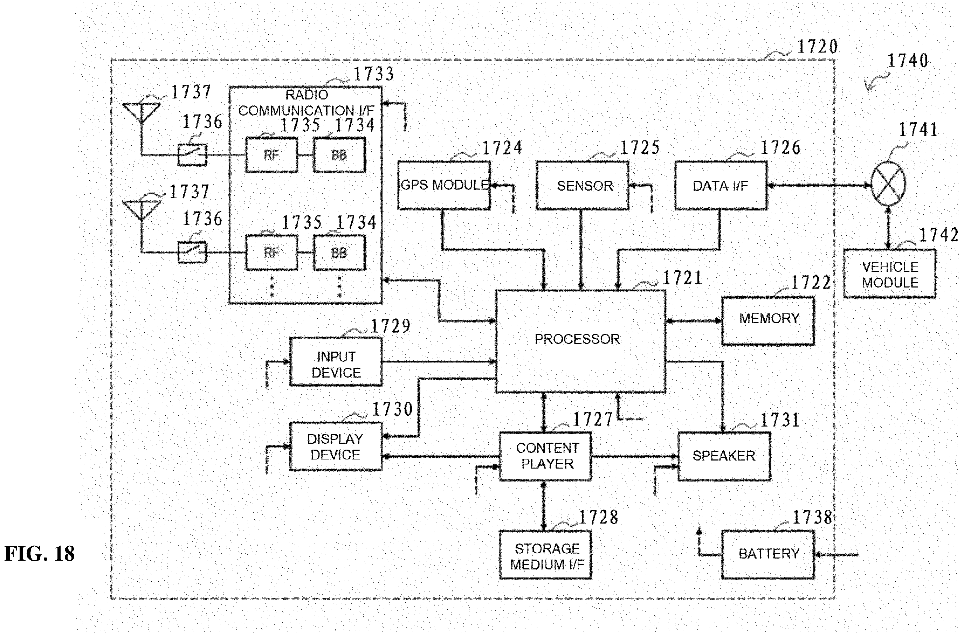

FIG. 18 is a block diagram showing an example of a schematic configuration of a car navigation device 1720 to which the technology of the present disclosure can be applied. The car navigation device 1720 may be implemented as the electronic device 2000 described with reference to FIG. 14A. The car navigation device 1720 includes a processor 1721, a memory 1722, a global positioning system (GPS) module 1724, a sensor 1725, a data interface 1726, a content player 1727, a storage medium interface 1728, an input device 1729, a display device 1730, a speaker 1731, and a radio communication interface 1733, one or more antenna switches 1736, one or more antennas 1737, and a battery 1738.

The processor 1721 may be, for example, a CPU or a SoC, and controls navigation functions and other functions of the car navigation device 1720. The memory 1722 includes a RAM and a ROM, and stores data and programs executed by the processor 1721.

The GPS module 1724 uses a GPS signal received from a GPS satellite to measure the position (such as latitude, longitude, and altitude) of the car navigation device 1720. The sensor 1725 may include a set of sensors such as a gyroscope sensor, a geomagnetic sensor, and an air pressure sensor. The data interface 1726 is connected to, for example, an in-vehicle network 1741 via a terminal not shown, and acquires data (such as vehicle speed data) generated by the vehicle.

The content player 1727 reproduces content stored in a storage medium such as a CD and a DVD, which is inserted into the storage medium interface 1728. The input device 1729 includes, for example, a touch sensor, a button, or a switch configured to detect a touch on the screen of the display device 1730, and receives an operation or information input from a user. The display device 1730 includes a screen such as an LCD or OLED display, and displays an image of a navigation function or reproduced content. The speaker 1731 outputs the sound of the navigation function or the reproduced content.

The radio communication interface 1733 supports any cellular communication scheme such as 4G LTE or 5G NR, and performs wireless communication. The radio communication interface 1733 may generally include, for example, a BB processor 1734 and an RF circuit 1735. The BB processor 1734 may perform, for example, encoding/decoding, modulation/demodulation, and multiplexing/demultiplexing, and perform various types of signal processing for wireless communication. Meanwhile, the RF circuit 1735 may include, for example, a mixer, a filter, and an amplifier, and transmit and receive wireless signals via the antenna 1737. The radio communication interface 1733 may also be a chip module on which a BB processor 1734 and an RF circuit 1735 are integrated. As shown in FIG. 18, the radio communication interface 1733 may include a plurality of BB processors 1734 and a plurality of RF circuits 1735. Although FIG. 18 shows an example in which the radio communication interface 1733 includes a plurality of BB processors 1734 and a plurality of RF circuits 1735, the radio communication interface 1733 may also include a single BB processor 1734 or a single RF circuit 1735.

In addition, in addition to the cellular communication scheme, the radio communication interface 1733 may support other types of wireless communication scheme, such as a short-range wireless communication scheme, a near field communication scheme, and a wireless LAN scheme. In this case, the radio communication interface 1733 may include a BB processor 1734 and an RF circuit 1735 for each wireless communication scheme.

Each of the antenna switches 1736 switches the connection destination of the antenna 1737 between a plurality of circuits included in the radio communication interface 1733, such as circuits for different wireless communication schemes.

The antennas 1737 includes multiple antenna elements, such as multiple antenna arrays for massive MIMO. The antennas 1737, for example, can be arranged into a matrix of antenna arrays, and are used by the radio communication interface 1733 to transmit and receive wireless signals.

In addition, the car navigation device 1720 may include an antenna 1737 for each wireless communication scheme. In this case, the antenna switch 1736 may be omitted from the configuration of the car navigation device 1720.

The battery 1738 supplies power to each block of the car navigation device 1720 shown in FIG. 18 via a feeder, and the feeder is partially shown as a dotted line in the figure. The battery 1738 accumulates power provided from the vehicle.

In the car navigation device 1720 shown in FIG. 18, one or more components included in the processing circuitry 2001 described with reference to FIG. 14A can be implemented in the radio communication interface 1733. Alternatively, at least a part of these components may be implemented in the processor 1721. As an example, the car navigation device 1720 includes a part (for example, the BB processor 1734) or the whole of the radio communication interface 1733, and/or a module including the processor 1721, and one or more components may be implemented in the module. In this case, the module may store a program that allows processing to function as one or more components (in other words, a program for allowing the processor to perform operations of one or more components), and may execute the program. As another example, a program for allowing the processor to function as one or more components may be installed in the car navigation device 1720, and the radio communication interface 1733 (for example, the BB processor 1734) and/or the processor 1721 may Execute the procedure. As described above, as a device including one or more components, a car navigation device 1720 or a module may be provided, and a program for allowing the processor to function as one or more components may be provided. In addition, a readable medium in which the program is recorded may be provided.

In addition, in the car navigation device 1720 shown in FIG. 18, the communication 2005 in FIG. 14A can be implemented in the radio wireless interface 1733 (e.g., the RF circuit 1735).

The technology of the present disclosure may also be implemented as an in-vehicle system (or vehicle) 1740 including one or more of a car navigation device 1720, an in-vehicle network 1741, and a vehicle module 1742. The vehicle module 1742 generates vehicle data such as vehicle speed, engine speed, and failure information, and outputs the generated data to the in-vehicle network 1741.

Although the illustrative embodiments of the present disclosure have been described with reference to the accompanying drawings, the present disclosure is certainly not limited to the above examples. Those skilled in the art may achieve various adaptions and modifications within the scope of the appended claims, and it will be appreciated that these adaptions and modifications certainly fall into the scope of the technology of the present disclosure.

For example, in the above embodiments, the multiple functions included in one module may be implemented by separate means. Alternatively, in the above embodiments, the multiple functions included in multiple modules may be implemented by separate means, respectively. In additions, one of the above functions may be implemented by multiple modules. Needless to say, such configurations are included in the scope of the technology of the present disclosure.

In this specification, the steps described in the flowcharts include not only the processes performed sequentially in chronological order, but also the processes performed in parallel or separately but not necessarily performed in chronological order. Furthermore, even in the steps performed in chronological order, needless to say, the order may be changed appropriately.

Although the present disclosure and its advantages have been described in detail, it will be appreciated that various changes, replacements and transformations may be made without departing from the spirit and scope of the present disclosure as defined by the appended claims. In addition, the terms "include", "comprise" or any other variants of the embodiments of the present disclosure are intended to be non-exclusive inclusion, such that the process, method, article or device including a series of elements includes not only these elements, but also those that are not listed specifically, or those that are inherent to the process, method, article or device. In case of further limitations, the element defined by the sentence "include one" does not exclude the presence of additional same elements in the process, method, article or device including this element.

## Claims

1. An electronic device on side of a base station, comprising a processing circuitry configured to:
determine a first beam for a first transport channel between the base station and a UE;
send, to the UE, a dynamic signaling including beam indication information on the first beam, such that a beam for the first transport channel is updated to the first beam; and
in a case where the updating of the beam for the first transport channel is successful, update a beam for a second transport channel and/or a reference signal between the base station and the UE to the first beam.

2. The electronic device of claim 1, wherein the dynamic signaling includes downlink control information (DCI), and
wherein the first transport channel is a Physical Downlink Shared Channel (PDSCH) or Physical Uplink Shared Channel (PUSCH), and the second transport channel is a Physical Downlink Control Channel (PDCCH) scheduling the PDSCH or PUSCH.

3. The electronic device of claim 1, wherein the dynamic signaling includes downlink control information (DCI), and
wherein the first transport channel is a Physical Downlink Control Channel (PDCCH) or Physical Uplink Control Channel (PUCCH), and the second transport channel is a Physical Downlink Shared Channel (PDSCH) or Physical Uplink Shared Channel (PUSCH).

4. The electronic device of claim 1, wherein the dynamic signaling includes Medium Access Control (MAC) control element (CE), and
wherein the first transport channel is a Physical Downlink Control Channel (PDCCH), and the second transport channel is a Physical Downlink Shared Channel (PDSCH) scheduled by the PDCCH.

5. The electronic device of claim 1, wherein the dynamic signaling includes Medium Access Control (MAC) control element (CE), and
wherein the first transport channel is a Physical Uplink Control Channel (PUCCH), and the second transport channel is a Physical Uplink Shared Channel (PUSCH).

6. The electronic device of claim 2, wherein the processing circuitry is further configured to:
transmit the PDSCH or receive the PUSCH with the first beam; and
in a case where the transmission of the PDSCH or PUSCH is successful, confirm that the updating of the beam for the first transport channel is successful.

7. The electronic device of any of claims 3-5, wherein the processing circuitry is further configured to:
in a case where an acknowledgement (ACK) for the dynamic signaling is received or a negative acknowledgement (NACK) for the dynamic signaling is not received from the UE, confirm that the updating of the beam for the first transport channel is successful.

8. The electronic device of claim 4 or 5, wherein the first transport channel includes one of: a plurality of transport channels within the same Bandwidth Part (BWP), a plurality of transport channels within different BWPs on the same Component Carrier (CC), or a plurality of transport channels on different CCs.

9. The electronic device of claim 1, wherein the beam indication information includes transmission configuration indicator (TCI) state or spatial relation information.

10. An electronic device on side of a UE, comprising:
a processing circuitry configured to:
receive, from a base station, a dynamic signaling including beam indication information on a first beam which is determined to be used for a first transport channel between the UE and the base station;
update a beam for the first transport channel to the first beam; and
in a case where the updating of the beam for the first transport channel is successful, update a beam for a second transport channel and/or a reference signal between the UE and the base station to the first beam.

11. The electronic device of claim 10, wherein the dynamic signaling is Downlink Control Information (DCI), and
wherein the first transport channel is a Physical Downlink Shared Channel (PDSCH) or Physical Uplink Shared Channel (PUSCH), and the second transport channel is a Physical Downlink Control Channel (PDCCH) scheduling the PDSCH or PUSCH.

12. The electronic device of claim 10, wherein the dynamic signaling is downlink control information (DCI), and
wherein the first transport channel is a Physical Downlink Control Channel (PDCCH) or Physical Uplink Control Channel (PUCCH), and the second transport channel is a Physical Downlink Shared Channel (PDSCH) or Physical Uplink Shared Channel (PUSCH).

13. The electronic device of claim 10, wherein the dynamic signaling is Medium Access Control (MAC) control element (CE), and
wherein the first transport channel is a Physical Downlink Control Channel (PDCCH), and the second transport channel is a Physical Downlink Shared Channel (PDSCH) scheduled by the PDCCH.

14. The electronic device of claim 10, wherein the dynamic signaling is Medium Access Control (MAC) control element (CE), and
wherein the first transport channel is a Physical Uplink Control Channel (PUCCH), and the second transport channel is a Physical Uplink Shared Channel (PUSCH).

15. The electronic device of claim 11, wherein the processing circuitry is further configured to:
receive the PDSCH or transmit the PUSCH with the first beam; and
in a case where the transmission of the PDSCH or PUSCH is successful, confirm that the updating of the beam for the first transport channel is successful.

16. The electronic device of any of claims 12-14, wherein the processing circuitry is further configured to:
in a case where the dynamic signaling is received successfully, confirm that the updating of the beam for the first transport channel is successful, and send an acknowledgement (ACK) for the dynamic signaling or do not send a negative acknowledgement (NACK) for the dynamic signaling to the base station.

17. The electronic device of claim 13 or 14, wherein the first transport channel includes one of: a plurality of transport channels within the same Bandwidth Part (BWP), a plurality of transport channels within different BWPs on the same Component Carrier (CC), or a plurality of transport channels on different CCs.

18. A communication method, comprising:
determining a first beam for a first transport channel between a base station and a UE;
sending, to the UE, a dynamic signaling including beam indication information on the first beam, such that a beam for the first transport channel is updated to the first beam; and
in a case where the updating of the beam for the first transport channel is successful, updating a beam for a second transport channel and/or a reference signal between the base station and the UE to the first beam.

19. A communication method, comprising:
receiving, from a base station, a dynamic signaling including beam indication information on a first beam which is determined to be used for a first transport channel between a UE and the based station;
updating a beam for the first transport channel to the first beam; and
in a case where the updating of the beam for the first transport channel is successful, updating a beam for a second transport channel and/or a reference signal between the UE and the base station to the first beam.

20. A non-transitory computer readable storage medium storing executable instructions which, when executed, perform the communication method according to claim 18 or 19.
